# EUROPEAN PATENT SPECIFICATION

(11) **EP 4 377 373 B1**
(45) Date of publication and mention of the grant of the patent: **16.07.2025**
(21) Application number: 22754559.7
(22) Date of filing: 28.07.2022
(51) Int. Cl.: C08G 59/66, C08G 75/045, C09J 163/00

(54) **CURABLE, ONE-PART, DUAL-STAGE THIOL-ENE-EPOXY LIQUID ADHESIVES AND METHODS**
HÄRTBARE EINTEILIGE ZWEISTUFIGE THIOL-EN-EPOXID-FLÜSSIGKLEBSTOFFE UND VERFAHREN
ADHÉSIFS LIQUIDES DURCISSABLES À BASE DE THIOL-ÈNE-ÉPOXY MONOCOMPOSANTS À DEUX ÉTAPES, ET PROCÉDÉS

(30) Priority: 30.07.2021 US 202163227706 P
(43) Date of publication of application: 05.06.2024
(73) Proprietor: 3M Innovative Properties Company, Saint Paul, Minnesota 55133-3427 (US)
(72) Inventor: KROPP, Michael A., Saint Paul, Minnesota 55133-3427 (US); GIBNEY, Katherine A., Saint Paul, Minnesota 55133-3427 (US); SETH, Jayshree, Saint Paul, Minnesota 55133-3427 (US)
(74) Representative: Vossius & Partner Patentanwälte Rechtsanwälte mbB
(86) International application number: PCT/IB2022/057019
(87) International publication number: WO 2023/007439

(56) References cited:
- EP-A1- 3 822 298
- WO-A1-2020/095153
- US-A1- 2010 105 795
- US-A1- 2020 208 020

## Description

### Background

Advances in the electronics industry have made precise deposition of assembly adhesives a critical processing parameter, particularly in view of high throughput demand and process efficiency. The increasingly popular smaller-sized microelectronic components have made precise deposition of solder or adhesives for device assembly that much more important. Where precise adhesive deposition does not occur - either due to adhesive deposition technique imprecision, or spreading of the adhesive due to inappropriate rheological properties for the particular application, or both - surface mounting of components may not occur at all, and even when mounting does occur, the mounting may not occur in a commercially acceptable manner.

Thus, design features in mobile handheld devices and other electronics are challenging the use of current adhesives, particularly in articles with small dimensions. For example, as bondlines get thinner, pressure sensitive adhesives and hot melt polyurethane adhesives cannot provide enough strength. Film adhesives are expensive and typically require cutting small articles with a complex shape, thereby generating significant waste. Thus, adhesives that can be placed with precision, e.g., through printing, to the desired size and shape are desirable.

Epoxy-based compositions typically have thermal cure profiles that can be tailored to specific application temperature requirements. Such cure profile tailoring assists in maintaining the integrity of the electronic components during the bonding process in, e.g., cell phone assembly. In addition, extended room temperature pot lives of epoxy-based compositions can be tailored so the composition may be applied to a larger number of parts over an extended period of time. This prolongs the useable application life of the compositions, thereby ensuring reproducible dispensing properties.

Although such adhesives are known, there is still a need, particularly for adhesives that can be dispensed and initially cured to control flow, yet provide immediate green strength and a significant open time, while offering high adhesive strength and resistance to chemicals. Certain substrates, especially in electronic devices, can be heat sensitive, thus it is important to have a system which can be thermally cured at relatively low temperatures (e.g., below 80°C).

EP3822298 A1 deals with epoxy stabilization using substituted barbituric acids. US 2020/0108020 A1 deals with a thermally curable adhesive film. WO 2020/095153 A1 discloses curable sealant compositions US 2010/0105795 A1 describes liquid stable thiol-acrylate/vinyl ether compositions.

### Summary

The present disclosure provides a curable, one-part, dual-stage thiol-ene-epoxy liquid adhesive composition, articles and methods. The composition includes: an epoxy resin component including an epoxy resin having at least two epoxide groups per molecule; a thiol component including a polythiol compound having at least two thiol groups; a nitrogen-containing catalyst for the epoxy resin; a barbituric acid derivative soluble in the thiol-epoxy component of the thiol-ene-epoxy adhesive composition; a non-(meth)acrylate ethylenically unsaturated compound; and a photoinitiator; wherein the nitrogen-containing catalyst is insoluble in the ethylenically unsaturated compound and the polythiol compound separately (per Solubility Test).

In this context, a "one-part" composition includes all the components (e.g., epoxy resin component, thiol component, nitrogen-containing catalyst, barbituric acid derivative, non-(meth)acrylate ethylenically unsaturated compound, and photoinitiator) in admixture.

In this context, a "dual-stage" composition, often referred to as a "B-stage" composition, is one that can be partially cured (sometimes referred to as "pre-dried") to a "B-stage" (typically after being applied onto a substrate/surface), and further cured (e.g., completely cured) at a later time (e.g., days later) under the application of thermal energy.

In this context, "insoluble" means that the catalyst remains a powder and does not significantly dissolve, clump, gel, or discolor per the Solubility Test in the Examples Section (a rating of 1 or 2 per this test at room temperature over 48 hours qualify as insoluble).

Also provided are methods. In one embodiment, a method of curing a curable, one-part, dual-cure thiol-ene-epoxy liquid adhesive composition is provided. The method includes: providing a curable, one-part, dual-cure thiol-ene-epoxy liquid adhesive composition as described herein; exposing the curable, one-part, dual-stage thiol-ene-epoxy liquid adhesive to actinic radiation to partially cure the liquid adhesive and form a B-stage adhesive. The same or a different party may then cure the B-stage adhesive by heating the B-stage adhesive to a temperature of at least 60°C to further cure the adhesive.

In another embodiment, a method of printing a curable thiol-ene-epoxy liquid adhesive composition is provided. The method includes: providing a curable, one-part, dual-stage thiol-ene-epoxy liquid adhesive composition as described herein; applying the curable, one-part thiol-ene-epoxy liquid adhesive composition to a substrate by stencil- or screen-printing to form an image; and exposing the curable, one-part, dual-stage thiol-ene-epoxy liquid adhesive to actinic radiation to partially cure the adhesive and form an image comprising a B-stage adhesive. The same or a different party may then cure the B-stage adhesive by heating the B-stage adhesive to a temperature of at least 60°C to further cure the adhesive.

The term "aliphatic" refers to C1-C40, suitably C1-C30, straight or branched chain alkenyl, alkyl, or alkynyl which may or may not be interrupted or substituted by one or more heteroatoms such as O, N, or S.

The term "cycloaliphatic" refers to cyclized aliphatic C3-C30, suitably C3-C20, groups and includes those interrupted by one or more heteroatoms such as O, N, or S.

The term "alkyl" refers to a monovalent group that is a radical of an alkane and includes straight-chain, branched, cyclic, and bicyclic alkyl groups, and combinations thereof, including both unsubstituted and substituted alkyl groups. Unless otherwise indicated, the alkyl groups typically contain from 1 to 30 carbon atoms. In some embodiments, the alkyl groups contain 1 to 20 carbon atoms, 1 to 10 carbon atoms, 1 to 6 carbon atoms, 1 to 4 carbon atoms, or 1 to 3 carbon atoms. Examples of "alkyl" groups include, but are not limited to, methyl, ethyl, n-propyl, n-butyl, n-pentyl, isobutyl, t-butyl, isopropyl, n-octyl, n-heptyl, ethylhexyl, cyclopentyl, cyclohexyl, cycloheptyl, adamantyl, norbornyl, and the like.

The term "alkylene" refers to a divalent group that is a radical of an alkane and includes groups that are linear, branched, cyclic, bicyclic, or a combination thereof. Unless otherwise indicated, the alkylene group typically has 1 to 30 carbon atoms. In some embodiments, the alkylene group has 1 to 20 carbon atoms, 1 to 10 carbon atoms, 1 to 6 carbon atoms, or 1 to 4 carbon atoms. Examples of "alkylene" groups include methylene, ethylene, 1,3-propylene, 1,2-propylene, 1,4-butylene, 1,4-cyclohexylene, and 1,4-cyclohexyldimethylene.

The term "aromatic" refers to C3-C40, suitably C3-C30, aromatic groups including both carboxyclic aromatic groups as well as heterocyclic aromatic groups containing one or more of the heteroatoms, O, N, or S, and fused ring systems containing one or more of these aromatic groups fused together.

The term "aryl" refers to a monovalent group that is aromatic and, optionally, carbocyclic. The aryl has at least one aromatic ring. Any additional rings can be unsaturated, partially saturated, saturated, or aromatic. Optionally, the aromatic ring can have one or more additional carbocyclic rings that are fused to the aromatic ring. Unless otherwise indicated, the aryl groups typically contain from 6 to 30 carbon atoms. In some embodiments, the aryl groups contain 6 to 20, 6 to 18, 6 to 16, 6 to 12, or 6 to 10 carbon atoms. Examples of an aryl group include phenyl, naphthyl, biphenyl, phenanthryl, and anthracyl.

The term "arylene" refers to a divalent group that is aromatic and, optionally, carbocyclic. The arylene has at least one aromatic ring. Optionally, the aromatic ring can have one or more additional carbocyclic rings that are fused to the aromatic ring. Any additional rings can be unsaturated, partially saturated, or saturated. Unless otherwise specified, arylene groups often have 6 to 20 carbon atoms, 6 to 18 carbon atoms, 6 to 16 carbon atoms, 6 to 12 carbon atoms, or 6 to 10 carbon atoms.

The term "aralkyl" refers to a monovalent group that is an alkyl group substituted with an aryl group (e.g., as in a benzyl group). The term "alkaryl" refers to a monovalent group that is an aryl substituted with an alkyl group (e.g., as in a tolyl group). Unless otherwise indicated, for both groups, the alkyl portion often has 1 to 10 carbon atoms, 1 to 6 carbon atoms, or 1 to 4 carbon atoms and an aryl portion often has 6 to 20 carbon atoms, 6 to 18 carbon atoms, 6 to 16 carbon atoms, 6 to 12 carbon atoms, or 6 to 10 carbon atoms.

Herein, the term "comprises" and variations thereof do not have a limiting meaning where these terms appear in the description and claims. Such terms will be understood to imply the inclusion of a stated step or element or group of steps or elements but not the exclusion of any other step or element or group of steps or elements. By "consisting of" is meant including, and limited to, whatever follows the phrase "consisting of." Thus, the phrase "consisting of" indicates that the listed elements are required or mandatory, and that no other elements may be present. By "consisting essentially of" is meant including any elements listed after the phrase, and limited to other elements that do not interfere with or contribute to the activity or action specified in the disclosure for the listed elements. Thus, the phrase "consisting essentially of" indicates that the listed elements are required or mandatory, but that other elements are optional and may or may not be present depending upon whether or not they materially affect the activity or action of the listed elements. Any of the elements or combinations of elements that are recited in this specification in open-ended language (e.g., comprise and derivatives thereof), are considered to additionally be recited in closed-ended language (e.g., consist and derivatives thereof) and in partially closed-ended language (e.g., consist essentially, and derivatives thereof).

The words "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the disclosure.

In this application, terms such as "a," "an," and "the" are not intended to refer to only a singular entity, but include the general class of which a specific example may be used for illustration. The terms "a," "an," and "the" are used interchangeably with the term "at least one." The phrases "at least one of" and "comprises at least one of" followed by a list refers to any one of the items in the list and any combination of two or more items in the list.

As used herein, the term "or" is generally employed in its usual sense including "and/or" unless the content clearly dictates otherwise.

The term "and/or" means one or all of the listed elements or a combination of any two or more of the listed elements.

Also herein, all numbers are assumed to be modified by the term "about" and in certain embodiments, preferably, by the term "exactly." As used herein in connection with a measured quantity, the term "about" refers to that variation in the measured quantity as would be expected by the skilled artisan making the measurement and exercising a level of care commensurate with the objective of the measurement and the precision of the measuring equipment used. Herein, "up to" a number (e.g., up to 50) includes the number (e.g., 50).

Also herein, the recitations of numerical ranges by endpoints include all numbers subsumed within that range as well as the endpoints (e.g., 1 to 5 includes 1, 1.5, 2, 2.75, 3, 3.80, 4, 5, etc.).

As used herein, the term "room temperature" refers to a temperature of 22°C to 25°C.

The term "in the range" or "within a range" (and similar statements) includes the endpoints of the stated range.

Reference throughout this specification to "one embodiment," "an embodiment," "certain embodiments," or "some embodiments," etc., means that a particular feature, configuration, composition, or characteristic described in connection with the embodiment is included in at least one embodiment of the invention. Thus, the appearances of such phrases in various places throughout this specification are not necessarily referring to the same embodiment of the invention. Furthermore, the particular features, configurations, compositions, or characteristics may be combined in any suitable manner in one or more embodiments.

The above summary of the present disclosure is not intended to describe each disclosed embodiment or every implementation of the present invention. The description that follows more particularly exemplifies illustrative embodiments. In several places throughout the application, guidance is provided through lists of examples, which examples may be used in various combinations. In each instance, the recited list serves only as a representative group and should not be interpreted as an exclusive list. Thus, the scope of the present disclosure should not be limited to the specific illustrative structures described herein, but rather extends at least to the structures described by the language of the claims, and the equivalents of those structures. Any of the elements that are positively recited in this specification as alternatives may be explicitly included in the claims or excluded from the claims, in any combination as desired. Although various theories and possible mechanisms may have been discussed herein, in no event should such discussions serve to limit the claimable subject matter.

### Brief Description of the Figures

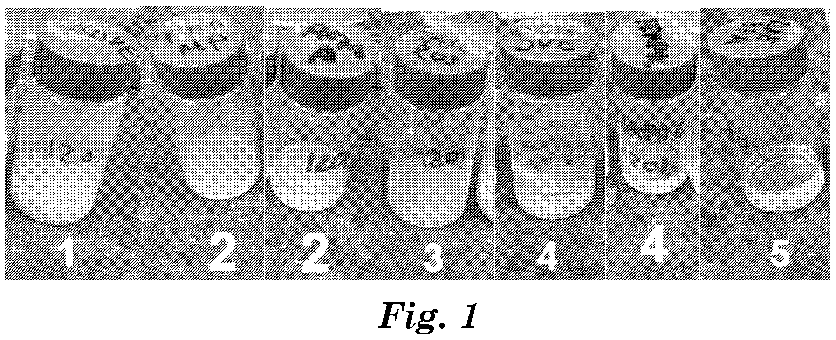

**Figure 1** shows photographs of exemplary ratings (1) through (5) for the Solubility Test of a nitrogen-containing catalyst in an ethylenically unsaturated compound or a polythiol compound.

### Detailed Description

The present disclosure provides a curable, one-part, dual-cure thiol-ene-epoxy liquid adhesive composition that includes: an epoxy resin component including an epoxy resin having at least two epoxide groups per molecule; a thiol component including a polythiol compound having at least two (preferably, primary) thiol groups; a nitrogen-containing catalyst for the epoxy resin; a barbituric acid derivative soluble in the thiol-epoxy component (i.e., a combination of the thiol component and the epoxy component) of the thiol-ene-epoxy adhesive composition (per the Stabilizer Solubility Test of the Examples Section); a non-(meth)acrylate ethylenically unsaturated compound; and a photoinitiator; wherein the nitrogen-containing catalyst is insoluble in the ethylenically unsaturated compound and the polythiol compound separately (per the Solubility Test).

This is a "one-part" composition because it includes all the components in admixture, and a "dual-stage" composition because it can be partially cured to an intermediate "B-stage" (typically after being applied onto one substrate/surface) and then further cured (e.g., completely cured) at a later time (e.g., days later) under the application of thermal energy. The initial curing to form the intermediate B-stage involves reaction between the ethylenically unsaturated compound and the polythiol compound. The subsequent curing of the intermediate B-stage adhesive involves reaction between the epoxy resin and the polythiol compound.

For example, the curable, one-part, dual-stage thiol-ene-epoxy liquid adhesive can be exposed to actinic radiation to activate the photoinitiator and partially cure the liquid adhesive and form an intermediate B-stage adhesive, which is then heated to a temperature of at least 60°C to further cure the adhesive. The two-stage curing allows the initial liquid composition to form a PSA-like B-stage adhesive that is not as flowable as the initial liquid composition.

The initial compositions (i.e., the curable, one-part, dual-stage thiol-ene-epoxy adhesives) of the present disclosure are liquid and sufficiently flowable that they can be stencil- or screen-printable. Thus, they can be placed with precision, e.g., through printing, to form an image of a desired size and shape, which is substantially maintained after the composition is applied to a substrate. By this it is meant that the composition once applied to form an image via a printing process (e.g., a stencil- or screen-printing operation) would not significantly flow or run and distort the applied image.

The time that the intermediate B-stage adhesive remains workable (i.e., curable) is referred to as the "open time." The compositions of the present disclosure have open times of greater than 2 days, greater than 3 days, greater than 4 days, greater than 5 days, greater than 6 days, greater than 7 days, greater than 2 weeks, greater than 3 weeks, or greater than 4 weeks. The open time is determined by the adhesive showing less than 20% decrease in cure exotherm by differential scanning calorimetry (DSC) (per the Open Time Test in the Examples Section, using a ramp from 0-200°C at a 5°C/min ramp rate).

The curable thiol-ene-epoxy liquid adhesive compositions possess good low temperature curability. In certain embodiments, the curable thiol-ene-epoxy adhesive composition is thermally curable at a temperature of at least 60°C. In certain embodiments, the curable thiol-ene-epoxy adhesive composition is thermally curable at a temperature of up to 90°C, up to 80°C, up to 70°C, or up to 65°C. In certain embodiments, the curable thiol-ene-epoxy adhesive composition is thermally curable at a temperature of 60-65°C. The resultant thermally cured adhesives function as structural adhesives, even without the formation of an intermediate B-stage adhesive. Thus, even though the liquid adhesive compositions are referred to herein as "dual-stage" compositions, they need not be used by first forming an intermediate B-stage adhesive.

Preferably, the curable thiol-ene-epoxy liquid adhesive compositions are initially cured using actinic radiation to form an intermediate B-stage adhesive that also possess good low temperature curability. In certain embodiments, the intermediate B-stage adhesive formed from the curable thiol-ene-epoxy adhesive composition is thermally curable at a temperature of at least 60°C. In certain embodiments, the intermediate B-stage adhesive formed from the curable thiol-ene-epoxy adhesive composition is thermally curable at a temperature of up to 90°C, up to 80°C, up to 70°C, or up to 65°C. In certain embodiments, the intermediate B-stage adhesive formed from the curable thiol-ene-epoxy adhesive composition is thermally curable at a temperature of 60-65°C.

Thus, curable thiol-ene-epoxy liquid adhesive compositions, and the curable intermediate B-stage adhesives, of the present disclosure are suitable for use in temperature sensitive bonding applications, particularly in the electronics industry, e.g., in cell phone assembly and bonding of plastic and metal parts. They may also be used in a variety of other applications, such as in the automotive and aerospace industries for parts bonding.

The curable thiol-ene-epoxy liquid adhesive compositions of the present disclosure may be produced by admixing the barbituric acid derivative, the nitrogen-containing catalyst, the epoxy, the polythiol, the non-(meth)acrylate ethylenically unsaturated compound, the photoinitiator; and optionally any fillers, thixotropic agents, diluents, adhesion promoters, and the like. Desirably, the soluble barbituric acid derivatives should be added to the composition prior to the addition of the nitrogen-containing catalyst.

### Epoxy Resin Component

The epoxy resin component included in the curable thiol-ene-epoxy adhesive composition contains an epoxy resin that has at least two epoxy functional groups (i.e., oxirane groups) per molecule. As used herein, the term oxirane group refers to the following divalent group.

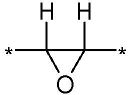

The asterisks denote a site of attachment of the oxirane group to another group. If an oxirane group is at the terminal position of the epoxy resin, the oxirane group is typically bonded to a hydrogen atom.

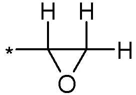

This terminal oxirane group is often part of a glycidyl group.

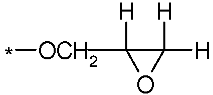

The epoxy resin includes a resin with at least two oxirane groups per molecule. For example, an epoxy compound can have 2 to 10, 2 to 6, or 2 to 4 oxirane groups per molecule. The oxirane groups are usually part of a glycidyl group.

Epoxy resins can include a single material or mixture of materials (e.g., monomeric, oligomeric, or polymeric compounds) selected to provide the desired viscosity characteristics before curing and to provide the desired mechanical properties after curing. If the epoxy resin includes a mixture of materials, at least one of the epoxy resins in the mixture is usually selected to have at least two oxirane groups per molecule. For example, a first epoxy resin in the mixture can have two to four or more oxirane groups and a second epoxy resin in the mixture can have one to four oxirane groups. In some of these examples, the first epoxy resin is a first glycidyl ether with two to four glycidyl groups and the second epoxy resin is a second glycidyl ether with one to four glycidyl groups.

The portion of the epoxy resin that is not an oxirane group (i.e., an epoxy resin compound minus the oxirane groups) can be aromatic, aliphatic, or a combination thereof and can be linear, branched, cyclic, or a combination thereof. The aromatic and aliphatic portions of the epoxy resin can include heteroatoms or other groups that are not reactive with the oxirane groups. That is, the epoxy resin can include halo groups, oxy groups such as in an ether linkage group, thio groups such as in a thio ether linkage group, carbonyl groups, carbonyloxy groups, carbonylimino groups, phosphono groups, sulfono groups, nitro groups, nitrile groups, and the like. The epoxy resin can also be a silicone-based material such as a polydiorganosiloxane-based material.

Although the epoxy resin can have any suitable molecular weight, the weight average molecular weight is usually at least 100 grams/mole, at least 150 grams/mole, at least 175 grams/mole, at least 200 grams/mole, at least 250 grams/mole, or at least 300 grams/mole. The weight average molecular weight can be up to 50,000 grams/mole or even higher for polymeric epoxy resins. The weight average molecular weight is often up to 40,000 grams/mole, up to 20,000 grams/mole, up to 10,000 grams/mole, up to 5,000 grams/mole, up to 3,000 grams/mole, or up to 1,000 grams/mole. For example, the weight average molecular weight can be in the range of 100 to 50,000 grams/mole, in the range of 100 to 20,000 grams/mole, in the range of 10 to 10,000 grams/mole, in the range of 100 to 5,000 grams/mole, in the range of 200 to 5,000 grams/mole, in the range of 100 to 2,000 grams/mole, in the range of 200 to 2,000 grams/mole, in the range of 100 to 1,000 grams/mole, or in the range of 200 to 1,000 grams/mole.

Suitable epoxy resins are typically a liquid at room temperature; however, solid epoxy resins that can be dissolved in one of the other components of the composition, such as a liquid epoxy resin, can be used if desired. In most embodiments, the epoxy resin is a glycidyl ether. Exemplary glycidyl ethers can be of Formula (I).

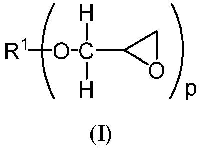

In Formula (I), group R¹ is a polyvalent group that is aromatic, aliphatic, or a combination thereof. Group R¹ can be linear, branched, cyclic, or a combination thereof. Group R¹ can optionally include halo groups, oxy groups, thio groups, carbonyl groups, carbonyloxy groups, carbonylimino groups, phosphono groups, sulfono groups, nitro groups, nitrile groups, and the like. Although the variable p can be any suitable integer greater than or equal to 2, p is often an integer in the range of 2 to 10, in the range of 2 to 6, or in the range of 2 to 4.

In some embodiments, the epoxy resin is a polyglycidyl ether of a polyhydric phenol, such as polyglycidyl ethers of bisphenol A, bisphenol F, bisphenol AD, catechol, and resorcinol. In some embodiments, the epoxy resin is a reaction product of a polyhydric alcohol with epichlorohydrin. Exemplary polyhydric alcohols include butanediol, polyethylene glycol, and glycerin. In some embodiments, the epoxy resin is an epoxidised (poly)olefinic resin, epoxidised phenolic novolac resin, epoxidised cresol novolac resin, and cycloaliphatic epoxy resin. In some embodiments, the epoxy resin is a glycidyl ether ester, such as that which can be obtained by reacting a hydroxycarboxylic acid with epichlorohydrin, or a polyglycidyl ester, such as that which can be obtained by reacting a polycarboxylic acid with epichlorohydrin. In some embodiments, the epoxy resin is a urethane-modified epoxy resin. Various combinations of two or more epoxy resins can be used if desired.

In some exemplary epoxy resins of Formula (I), the variable p is equal to 2 (i.e., the epoxy resin is a diglycidyl ether) and R¹ includes an alkylene (i.e., an alkylene is a divalent radical of an alkane and can be referred to as an alkane-diyl), heteroalkylene (i.e., a heteroalkylene is a divalent radical of a heteroalkane and can be referred to as a heteroalkane-diyl), arylene (i.e., a divalent radical of an arene compound), or combination thereof. Suitable alkylene groups often have 1 to 20 carbon atoms, 1 to 12 carbon atoms, 1 to 8 carbon atoms, or 1 to 4 carbon atoms. Suitable heteroalkylene groups often have 2 to 50 carbon atoms, 2 to 40 carbon atoms, 2 to 30 carbon atoms, 2 to 20 carbon atoms, 2 to 10 carbon atoms, or 2 to 6 carbon atoms with 1 to 10 heteroatoms, 1 to 6 heteroatoms, or 1 to 4 heteroatoms. The heteroatoms in the heteroalkylene can be selected from oxy, thio, or -NH- groups but are often oxy groups. Suitable arylene groups often have 6 to 18 carbon atoms or 6 to 12 carbon atoms. For example, the arylene can be phenylene, fluorenylene, or biphenylene. Group R¹ can further optionally include halo groups, oxy groups, thio groups, carbonyl groups, carbonyloxy groups, carbonylimino groups, phosphono groups, sulfono groups, nitro groups, nitrile groups, and the like. The variable p is usually an integer in the range of 2 to 4.

Some epoxy resins of Formula (I) are diglycidyl ethers where R¹ includes (a) an arylene group or (b) an arylene group in combination with an alkylene, heteroalkylene, or both. Group R¹ can further include optional groups such as halo groups, oxy groups, thio groups, carbonyl groups, carbonyloxy groups, carbonylimino groups, phosphono groups, sulfono groups, nitro groups, nitrile groups, and the like. These epoxy resins can be prepared, for example, by reacting an aromatic compound having at least two hydroxyl groups with an excess of epichlorohydrin. Examples of useful aromatic compounds having at least two hydroxyl groups include, but are not limited to, resorcinol, catechol, hydroquinone, p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, and 9,9-(4-hydroxyphenol)fluorene. Still other examples include the 2,2', 2,3', 2,4', 3,3', 3,4', and 4,4' isomers of dihydroxydiphenylmethane, dihydroxydiphenyldimethylmethane, dihydroxydiphenylethylmethylmethane, dihydroxydiphenylmethylpropylmethane, dihydroxydiphenylethylphenylmethane, dihydroxydiphenylpropylenphenylmethane, dihydroxydiphenylbutylphenylmethane, dihydroxydiphenyltolylethane, dihydroxydiphenyltolylmethylmethane, dihydroxydiphenyldicyclohexylmethane, and dihydroxydiphenylcyclohexane.

Some commercially available diglycidyl ether epoxy resins of Formula (I) are derived from bisphenol A (i.e., bisphenol A is 4,4'-dihydroxydiphenylmethane). Examples include, but are not limited to, those available under the trade designation EPON (e.g., EPON 1510, EPON 1310, EPON 828, EPON 872, EPON 1001, EPON 1004, and EPON 2004) from Momentive Specialty Chemicals, Inc. (Columbus, OH), those available under the trade designation DER (e.g., DER 331, DER 332, DER 336, and DER 439) from Olin Epoxy Co. (St. Louis, MO), and those available under the trade designation EPICLON (e.g., EPICLON 850) from Dainippon Ink and Chemicals, Inc. (Parsippany, NJ). Other commercially available diglycidyl ether epoxy resins are derived from bisphenol F (i.e., bisphenol F is 2,2'-dihydroxydiphenylmethane). Examples include, but are not limited to, those available under the trade designation DER (e.g., DER 334) from Olin Epoxy Co. (St. Louis, MO), those available under the trade designation EPICLON (e.g., EPICLON 830) from Dainippon Ink and Chemicals, Inc. (Parsippany, NJ), and those available under the trade designation ARALDITE (e.g., ARALDITE 281) from Huntsman Corporation (The Woodlands, TX).

Other epoxy resins of Formula (I) are diglycidyl ethers of a poly(alkylene oxide) diol. These epoxy resins also can be referred to as diglycidyl ethers of a poly(alkylene glycol) diol. The variable p is equal to 2 and R¹ is a heteroalkylene having oxygen heteroatoms. The poly(alkylene glycol) portion can be a copolymer or homopolymer and often includes alkylene units having 1 to 4 carbon atoms. Examples include, but are not limited to, diglycidyl ethers of poly(ethylene oxide) diol, diglycidyl ethers of poly(propylene oxide) diol, and diglycidyl ethers of poly(tetramethylene oxide) diol. Epoxy resins of this type are commercially available from Polysciences, Inc. (Warrington, PA) such as those derived from a poly(ethylene oxide) diol or from a poly(propylene oxide) diol having a weight average molecular weight of 400 grams/mole, about 600 grams/mole, or about 1000 grams/mole.

Still other epoxy resins of Formula (I) are diglycidyl ethers of an alkane diol (R¹ is an alkylene and the variable p is equal to 2). Examples include a diglycidyl ether of 1,4-dimethanol cyclohexyl, diglycidyl ether of 1,4-butanediol, and a diglycidyl ether of the cycloaliphatic diol formed from a hydrogenated bisphenol A such as those commercially available under the trade designation EPONEX (e.g., EPONEX 1510) from Hexion Specialty Chemicals, Inc. (Columbus, OH) and under the trade designation EPALLOY (e.g., EPALLOY 5001) from CVC Thermoset Specialties (Moorestown, NJ).

For some applications, the epoxy resins chosen for use in the curable coating compositions are novolac epoxy resins, which are glycidyl ethers of phenolic novolac resins. These resins can be prepared, for example, by reaction of phenols with an excess of formaldehyde in the presence of an acidic catalyst to produce the phenolic novolac resin. Novolac epoxy resins are then prepared by reacting the phenolic novolac resin with epichlorihydrin in the presence of sodium hydroxide. The resulting novolac epoxy resins typically have more than two oxirane groups and can be used to produce cured coating compositions with a high crosslinking density. The use of novolac epoxy resins can be particularly desirable in applications where corrosion resistance, water resistance, chemical resistance, or a combination thereof is desired. One such novolac epoxy resin is poly[(phenyl glycidyl ether)-co-formaldehyde]. Other suitable novolac resins are commercially available under the trade designation ARALDITE (e.g., ARALDITE GY289, ARALDITE EPN 1183, ARALDITE EP 1179, ARALDITE EPN 1139, and ARALDITE EPN 1138) from Huntsman Corporation (The Woodlands, TX), under the trade designation EPALLOY (e.g., EPALLOY 8230) from CVC Thermoset Specialties (Moorestown, NJ), and under the trade designation DEN (e.g., DEN 424 and DEN 431) from Olin Epoxy Co. (St. Louis, MO).

Yet other epoxy resins include silicone resins with at least two glycidyl groups and flame retardant epoxy resins with at least two glycidyl groups (e.g., a brominated bisphenol-type epoxy resin having at least two glycidyl groups such as that commercially available from Dow Chemical Co. (Midland, MI) under the trade designation DER 580).

The epoxy resin component is often a mixture of materials. For example, the epoxy resins can be selected to be a mixture that provides the desired viscosity or flow characteristics prior to curing. For example, within the epoxy resin may be reactive diluents that include monofunctional or certain multifunctional epoxy resins. The reactive diluent should have a viscosity which is lower than that of the epoxy resin having at least two epoxy groups. The reactive diluent is preferably selected to be one in which the amine catalyst is insoluble (per the Solubility Test).

Ordinarily, the reactive diluent should have a viscosity less than 250 mPa·s (cPs). The reactive diluent tends to lower the viscosity of the epoxy/polythiol adhesive composition and often has either a branched backbone that is saturated or a cyclic backbone that is saturated or unsaturated. Preferred reactive diluents have only one functional group (i.e., oxirane group) such as various monoglycidyl ethers. Some exemplary monofunctional epoxy resins include, but are not limited to, those with an alkyl group having 6 to 28 carbon atoms, such as (C6-C28)alkyl glycidyl ethers, (C6-C28)fatty acid glycidyl esters, (C6-C28)alkylphenol glycidyl ethers, and combinations thereof. In the event a monofunctional epoxy resin is the reactive diluent, such monofunctional epoxy resin should be employed in an amount of up to 50 parts based on the total of the epoxy resin component.

In some embodiments, the curable thiol-ene-epoxy adhesive compositions typically include at least 20 weight percent (wt-%), at least 25 wt-%, at least 30 wt-%, at least 35 wt-%, at least 40 wt-%, or at least 45 wt-%, epoxy resin component, based on the total weight of the curable thiol-ene-epoxy adhesive composition. If lower levels are used, the cured composition may not contain enough polymeric material (e.g., epoxy resin) to provide desired coating characteristics. In some embodiments, the curable thiol-ene-epoxy adhesive compositions include up to 80 wt-%, up to 75 wt-%, or up to 70 wt-%, epoxy resin component, based on the total weight of the curable thiol-ene-epoxy adhesive composition.

### Thiol Component

A thiol is an organosulfur compound that contains a carbon-bonded sulfhydryl or mercapto (-C-SH) group. Suitable polythiols are selected from a wide variety of compounds that have two or more thiol groups (preferably, primary thiol groups) per molecule, and that function as curatives for epoxy resins.

Examples of suitable polythiols include trimethylolpropane tris(beta-mercaptopropionate), trimethylolpropane tris(thioglycolate), pentaerythritol tetrakis(thioglycolate), pentaerythritol tetrakis(beta-mercaptopropionate), dipentaerythritol poly(beta-mercaptopropionate), ethylene glycol bis(beta-mercaptopropionate), a (C1-C12)alkyl polythiol (e.g., butane-1,4-dithiol and hexane-1,6-dithiol), a (C6-C12)aromatic polythiol (e.g., p-xylenedithiol and 1,3,5-tris (mercaptomethyl) benzene). Combinations of polythiols can be used if desired.

In some embodiments, the curable thiol-ene-epoxy compositions typically include at least 25 wt-%, at least 30 wt-%, or at least 35 wt-%, thiol component, based on the total weight of the curable thiol-ene-epoxy adhesive composition. In some embodiments, the curable thiol-ene-epoxy compositions include up to 70 wt-%, up to 65 wt-%, up to 60 wt-%, up to 55 wt-%, up to 50 wt-%, up to 45 wt-%, or up to 40 wt-%, thiol component, based on the total weight of the curable thiol-ene-epoxy adhesive composition. Various combinations of two or more polythiols can be used if desired.

In some embodiments, the ratio of the epoxy component to the thiol component in the curable thiol-ene-epoxy adhesive compositions of the present disclosure (prior to forming the B-stage) is from 0.2:1 to 0.95:1, or 0.3:1 to 0.8:1 (epoxy:thiol equivalents).

Systems containing epoxy resins and polythiols suitable for use in the present disclosure are disclosed in U.S. Pat. No. 5,430,112 (Sakata et al.).

### Non-(meth)acrylate Ethylenically Unsaturated Compounds

The non-(meth)acrylate ethylenically unsaturated compounds (i.e., "enes") include ethylenically unsaturated compounds but not acrylates or methacrylates. Generally, such compounds include one or two ethylenically unsaturated groups (preferably, one) and 4 to 30 carbon atoms (preferably, 4 to 18 carbon atoms). In certain preferred embodiments, such compounds include one ethylenically unsaturated group and 4 to 18 carbon atoms. Preferred such compounds include allyl ethers and vinyl ethers. Examples include polyvinyl ethers having from 4 to 30 carbon atoms (preferably, 4 to 18 carbon atoms) carbon atoms such as, for example, divinyl ether, ethylene glycol divinyl ether, 1-4-butanediol divinyl ether, 1,6-hexandiol divinylether, diethylene glycol divinyl ether, triethylene glycol divinyl ether, tetraethylene glycol divinyl ether, cyclohexanedimethanol divinyl ether, trimethylolpropane trivinyl ether, pentaerythritol tetravinyl ether, bisphenol A divinyl ether, biphenol F divinyl ether, bisphenol A diallyl ether, bisphenol F diallyl ether; isocyanurates having 5 to 30 carbon atoms (preferably, 5 to 15 carbon atoms) such as, for example, diallyl isocyanurate and triallyl isocyanurate, cyanurates having from 9 to 30 carbon atoms (preferably, 9 to 15 carbon atoms) such as, for example, diallyl cyanurate and triallyl cyanurate.

In some embodiments, the curable thiol-ene-epoxy compositions typically include at least 10 wt-%, at least 20 wt-%, or at least 30 wt-%, non-(meth)acrylate ethylenically unsaturated compound, based on the total weight of the curable thiol-ene-epoxy adhesive composition. In some embodiments, the curable thiol-ene-epoxy compositions include up to 60 wt-%, up to 50 wt-%, or up to 40 wt-%, non-(meth)acrylate ethylenically unsaturated compound, based on the total weight of the curable thiol-ene-epoxy adhesive composition. Various combinations of two or more non-(meth)acrylate ethylenically unsaturated compounds can be used if desired.

In some embodiments, the ratio of the non-(meth)acrylate ethylenically unsaturated compounds to the polylthiol compounds in the curable thiol-ene-epoxy adhesive compositions of the present disclosure (prior to forming the B-stage) is 0.05:1 to 0.8:1, or 0.2:1 to 0.7:1 (ene:thiol equivalents).

### Nitrogen-Containing Catalysts

The thiol-ene-epoxy adhesive compositions of the present disclosure include at least one nitrogen-containing catalyst. Such catalysts are typically of the heat activated class. In certain embodiments, the nitrogen-containing catalyst is capable of activation at temperatures at or above 60°C to affect the thermal curing of the epoxy resin.

Suitable nitrogen-containing catalysts are typically solids at room temperature, and not soluble in the other components of the thiol-ene-epoxy adhesive compositions of the present disclosure. In certain embodiments, the nitrogen-containing catalysts are in particle form having a particle size (i.e., the largest dimension of the particles, such as the diameter of a sphere) of at least 100 micrometers (i.e., microns).

As used herein, the term "nitrogen-containing catalyst" refers to any nitrogen-containing compound that catalyzes the curing of the epoxy resin. The term does not imply or suggest a certain mechanism or reaction for curing. The nitrogen-containing catalyst can directly react with the oxirane ring of the epoxy resin, can catalyze or accelerate the reaction of the polythiol compound with the epoxy resin, or can catalyze or accelerate the self-polymerization of the epoxy resin.

In certain embodiments, the nitrogen-containing catalysts are amine-containing catalysts. Some amine-containing catalysts have at least two groups of formula -NR²H, wherein R² is selected from hydrogen, alkyl, aryl, alkaryl, or aralkyl. Suitable alkyl groups often have 1 to 12 carbon atoms, 1 to 8 carbon atoms, 1 to 6 carbon atoms, or 1 to 4 carbon atoms. The alkyl group can be cyclic, branched, linear, or a combination thereof. Suitable aryl groups usually have 6 to 12 carbon atom such as a phenyl or biphenyl group. Suitable alkylaryl groups can include the same aryl and alkyl groups discussed above.

The nitrogen-containing catalyst minus the at least two amino groups (i.e., the portion of the catalyst that is not an amino group) can be any suitable aromatic group, aliphatic group, or combination thereof.

Exemplary nitrogen-containing catalysts for use herein include a reaction product of phthalic anhydride and an aliphatic polyamine, more particularly a reaction product of approximately equimolar proportions of phthalic acid and diethylamine triamine, as described in British Patent 1,121,196 (Ciba Geigy AG). A catalyst of this type is available commercially from Ciba Geigy AG under the tradename CIBA HT 9506.

Yet another type of nitrogen-containing catalyst is a reaction product of: (i) a polyfunctional epoxy compound; (ii) an imidazole compound, such as 2-ethyl-4-methylimidazole; and (iii) phthalic anhydride. The polyfunctional epoxy compound may be a compound having two or more epoxy groups in the molecule as described in U.S. Pat. No. 4,546,155 (Hirose et al.). A catalyst of this type is commercially available from Ajinomoto Co. Inc. (Tokyo, Japan) under the tradename AJICURE PN-23, which is believed to be an adduct of EPON 828 (bisphenol type epoxy resin epoxy equivalent 184-194, commercially available from Hexion Specialty Chemicals, Inc. (Columbus, OH)), 2-ethyl-4-methylimidazole, and phthalic anhydride.

Other suitable nitrogen-containing catalysts include the reaction product of a compound having one or more isocyanate groups in its molecule with a compound having at least one primary or secondary amino group in its molecule. Additional nitrogen-containing catalysts include 2-heptadeoylimidazole, 2-phenyl-4,5-dihydroxymethylimidazole, 2-phenyl-4-methyl-5-hydroxymethylimidazole, 2-phenyl-4-benzyl-5-hydroxymethylimidazole, 2,4-diamino-8-2-methylimidazolyl-(1)-ethyl-5-triazine, or a combination therof, as well as products of triazine with isocyanuric acid, succinohydrazide, adipohydrazide, isophtholohydrazide, o-oxybenzohydrazide, salicylohydrazide, or a combination thereof.

Nitrogen-containing catalysts are commercially available from sources such as Ajinomoto Co. Inc. (Tokyo, Japan) under the tradenames AMICURE MY-24, AMICURE GG-216 and AMICURE ATU CARBAMATE, from Hexion Specialty Chemicals, Inc. (Columbus, OH) under the tradename EPIKURE P-101, from T&K Toka (Chikumazawa, Miyoshi-Machi, Iruma-Gun, Saitama, Japan) under the tradenames FXR-1020, FXR-1081, and FXR-1121, from Shikoku (Marugame, Kagawa Prefecture, Japan) under the tradenames CUREDUCT P-2070 and P-2080, from Air Products and Chemicals (Allentown, PA) under the tradenames ANCAMINE 2441 and 2442, from AC Catalysts (Linden, NJ) under the tradenames TECHNICURE LC80 and LC100, and from Asahi Kasei Kogyo, K.K. (Japan) under the tradename NOVACURE HX-372.

Other suitable nitrogen-containing catalysts are those described in U.S. Pat. No. 5,077,376 (Dooley et al.) and U.S. Pat. No. 5,430,112 (Sakata et al.) referred to as "amine adduct latent accelerators." Other exemplary nitrogen-containing catalysts are described, for example, in British Patent 1,121,196 (Ciba Geigy AG), European Patent Application No. 138465A (Ajinomoto Co.), and European Patent Application No. 193068A (Asahi Chemical).

In some embodiments, the curable thiol-ene-epoxy adhesive compositions typically include at least 0.5 wt-%, at least 1 wt-%, at least 2 wt-%, at least 3 wt-%, at least 4 wt-%, or at least 5 wt-%, of a nitrogen-containing catalyst, based on the total weight of the curable thiol-ene-epoxy adhesive composition. In some embodiments, the curable thiol-ene-epoxy compositions typically include up to 20 wt-%, up to 15 wt-%, or up to 10 wt-%, of a nitrogen-containing catalyst, based on the total weight of the curable thiol-ene-epoxy adhesive composition. Various combinations of two or more nitrogen-containing catalysts can be used if desired.

### Barbituric Acid Derivatives

The barbituric acid derivatives useful in the curable thiol-ene-epoxy adhesive compositions of the present disclosure include those that are soluble in the thiol-epoxy component (i.e., the combination of thiol and epoxy components) of the thiol-ene-epoxy adhesive compositions of the present disclosure.

In this context, a barbituric acid derivative "soluble in the thiol-epoxy component" (i.e., a "soluble" barbituric acid derivative) refers to a barbituric acid derivative which, when incorporated in a thiol-epoxy component (i.e., combination of the epoxy component and the thiol component of a thiol-ene-epoxy adhesive composition) in an amount of 5 wt-%, produces a thiol-epoxy component with at least 80% clarity and/or at least 80% transmission, as evaluated according to the Stabilizer Solubility Test in the Examples Section. In certain embodiments, the clarity of a thiol-epoxy component (of a curable thiol-ene-epoxy adhesive composition) that includes 5 wt-% of a "soluble" barbituric acid derivative is at least 85%, at least 90%, or at least 95%. In certain embodiments, the transmission of a thiol-epoxy component (of a thiol-ene-epoxy adhesive composition) that includes 5 wt-% of a "soluble" barbituric acid derivative is at least 85%, or at least 90%.

A soluble barbituric acid derivative is used in a thiol-ene-epoxy adhesive composition in an amount that allows the thiol-ene-epoxy liquid adhesive composition to remain curable for a period of time such that there is no doubling in viscosity. Typically, this is an amount of at least 0.01 wt-%, based on the total weight of the curable thiol-ene-epoxy liquid adhesive composition.

The greater the amount of a soluble barbituric acid derivative used in a thiol-ene-epoxy adhesive composition, generally the longer the open time of the curable thiol-ene-epoxy B-stage adhesive composition. The greater the amount of a soluble barbituric acid derivative used in a thiol-ene-epoxy adhesive composition, generally the longer the time required to cure and/or the higher the temperature required to cure the curable thiol-ene-epoxy B-stage adhesive composition. Thus, depending on the use of the curable composition, there is a balance between open time and cure time/temperature. Typically, for a reasonable open time, cure time, and cure temperature, the amount of soluble barbituric acid derivative used is up to 1 wt-%, or up to 0.5 wt-%, based on the total weight of the curable thiol-ene-epoxy liquid adhesive composition.

Herein, the barbituric acid "derivatives" include those barbituric acid compounds substituted at one or more of the 1, 3, and/or 5 N positions, or at the 1 and/or 3 N positions and optionally at the 5 N position, with an aliphatic, cycloaliphatic, or aromatic group. In certain embodiments, the barbituric acid derivatives include those of Formula (II): 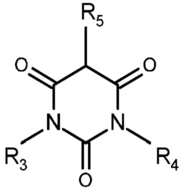 wherein one or more of the R³, R⁴, and R⁵ groups are represented by hydrogen, an aliphatic group, a cycloaliphatic group, or an aromatic group (e.g., phenyl), optionally further substituted in any position with one or more of (C1-C4)alkyl, -OH, halide (F, Br, Cl, I), phenyl, (C1-C4)alkylphenyl, (C1-C4)alkenylphenyl, nitro, or -OR⁶ where R⁶ is phenyl, a carboxylic group, a carbonyl group, or an aromatic group and R⁶ is optionally substituted with (C1-C4)alkyl, -OH, or halide; and further wherein at least one of the R³, R⁴, and R⁵ groups is not hydrogen. In certain embodiments, at least two of the R³, R⁴, and R⁵ groups are not hydrogen.

Such soluble acids function as stabilizers of the nitrogen-containing catalyst in the thiol-ene-epoxy adhesive compositions of the present disclosure. Preferably, the nitrogen-containing catalyst is stabilized against curing the epoxy resin at room temperature for a period of at least 2 weeks, at least 4 weeks, or at least 2 months.

Examples of suitable barbituric acid derivatives (i.e., substituted barbituric acids) include 1-benzyl-5-phenylbarbituric acid, 1-cycloheyl-5-ethylbarbituric acid (available from Chemische Fabrik Berg, Bitterfeld-Wolfen, Germany), 1,3-dimethylbarbituric acid (available from Alfa Aesar, Tewksbury, MA), and combinations thereof.

U.S. Pat. No. 6,653,371 (Burns et al.) teaches that a substantially insoluble solid organic acid is required for thiol-ene-epoxy adhesive compositions to stabilize the composition. Surprisingly, it was found that the use of a soluble organic acid, in particular, barbituric acid derivatives that are functionalized to make them more soluble, result in better stabilization of the thiol-ene-epoxy adhesive composition than the use of substantially insoluble organic acids. Also, U.S. Pat. No. 6,653,371 (Burns et al.) teaches that stabilizer effectiveness is directly affected by particle size of the stabilizing component added into the system. A benefit of using soluble barbituric acid derivatives as stabilizers is that the initial particle size does not alter stabilizer performance, at least because the stabilizer is fully dissolved throughout the curable thiol-ene-epoxy adhesive compositions.

### Optional Additives

The curable compositions of the present disclosure can include various optional additives provided they do not dissolve the nitrogen-containing catalyst. One such optional additive is a toughening agent. Toughening agents can be added to provide the desired overlap shear, peel resistance, and impact strength. Useful toughening agents are polymeric materials that may react with the epoxy resin and that may be cross-linked. Suitable toughening agents include polymeric compounds having both a rubbery phase and a thermoplastic phase or compounds which are capable of forming, with the epoxide resin, both a rubbery phase and a thermoplastic phase on curing. Polymers useful as toughening agents are preferably selected to inhibit cracking of the cured epoxy composition.

Some polymeric toughening agents that have both a rubbery phase and a thermoplastic phase are acrylic core-shell polymers wherein the core is an acrylic copolymer having a glass transition temperature below 0°C. Such core polymers may include polybutyl acrylate, polyisooctyl acrylate, polybutadiene-polystyrene in a shell comprised of an acrylic polymer having a glass transition temperature above 25°C, such as polymethylmethacrylate. Commercially available core-shell polymers include those available as a dry powder under the trade designations ACRYLOID KM 323, ACRYLOID KM 330, and PARALOID BTA 731, from Dow Chemical Co., and KANE ACE B-564 from Kaneka Corporation (Osaka, Japan). These core-shell polymers may also be available as a predispersed blend with a diglycidyl ether of bisphenol A at, for example, a ratio of 12 to 37 parts by weight of the core-shell polymer and are available under the trade designations KANE ACE (e.g., KANE ACE MX 157, KANE ACE MX 257, and KANE ACE MX 125) from Kaneka Corporation (Japan).

Another class of polymeric toughening agents that are capable of forming, with the epoxide group-containing material, a rubbery phase on curing, are carboxyl-terminated butadiene acrylonitrile compounds. Commercially available carboxyl-terminated butadiene acrylonitrile compounds include those available under the trade designations HYCAR (e.g., HYCAR 1300X8, HYCAR 1300X13, and HYCAR 1300X17) from Lubrizol Advanced Materials, Inc. (Cleveland, Ohio) and under the trade designation PARALOID (e.g., PARALOID EXL-2650) from Dow Chemical (Midland, MI).

Other polymeric toughening agents are graft polymers, which have both a rubbery phase and a thermoplastic phase, such as those disclosed in U.S. Pat. No. 3,496,250 (Czerwinski). These graft polymers have a rubbery backbone having grafted thereto thermoplastic polymer segments. Examples of such graft polymers include, for example, (meth)acrylate-butadiene-styrene, and acrylonitrile/butadiene-styrene polymers. The rubbery backbone is preferably prepared so as to constitute from 95 wt-% to 40 wt-% of the total graft polymer, so that the polymerized thermoplastic portion constitutes from 5 wt-% to 60 wt-% of the graft polymer.

Still other polymeric toughening agents are polyether sulfones such as those commercially available from BASF (Florham Park, NJ) under the trade designation ULTRASON (e.g., ULTRASON E 2020 P SR MICRO).

The curable compositions can additionally contain a non-reactive plasticizer to modify rheological properties. Commercially available plasticizers include those available under the trade designation BENZOFLEX 131 from Eastman Chemical (Kingsport, TN), JAYFLEX DINA available from ExxonMobil Chemical (Houston, TX), and PLASTOMOLL (e.g., diisononyl adipate) from BASF (Florham Park, NJ).

The curable compositions can also contain a flow control agent or thickener, to provide the desired rheological characteristics to the composition. Suitable flow control agents include fumed silica, such as treated fumed silica, available under the trade designation CAB-O-SIL TS 720, and untreated fumed silica available under the trade designation CAB-O-SIL M5, from Cabot Corp. (Alpharetta, GA).

In some embodiments, the curable compositions optimally contain adhesion promoters to enhance the bond to the substrate. The specific type of adhesion promoter may vary depending upon the composition of the surface to which it will be adhered. Adhesion promoters that have been found to be particularly useful for surfaces coated with ionic type lubricants used to facilitate the drawing of metal stock during processing include, for example, dihydric phenolic compounds such as catechol and thiodiphenol.

The curable compositions may also contain one or more conventional additives such as fillers (e.g., aluminum powder, carbon black, glass bubbles, talc, clay, calcium carbonate, barium sulfate, titanium dioxide, silica such as fused silica, silicates, glass beads, and mica), pigments, flexibilizers, reactive diluents, non-reactive diluents, fire retardants, antistatic materials, thermally and/or electrically conductive particles, and expanding agents including, for example, chemical blowing agents such as azodicarbonamide or expandable polymeric microspheres containing a hydrocarbon liquid, such as those sold under the trade designation EXPANCEL by Expancel Inc. (Duluth, GA). Particulate fillers can be in the form of flakes, rods, spheres, and the like. Additives are typically added in amounts to produce the desired effect in the resulting adhesive.

The amount and type of such additives may be selected by one skilled in the art, depending on the intended end use of the composition.

### Photoinitiators

The photoinitiators suitable for use in the compositions of the present disclosure include free-radical photoinitiators suitable for curing a polythiol with a non-(meth)acrylate ethylenically unsaturated compound (i.e., "ene").

In some embodiments, the free radical photoinitiator is a cleavage-type photoinitiator. Cleavage-type photoinitiators include acetophenones, alpha-aminoalkylphenones, benzoin ethers, benzoyl oximes, acylphosphine oxides and bisacylphosphine oxides and mixtures thereof.

Examples of useful photoinitiators include benzoin ethers (e.g., benzoin methyl ether or benzoin butyl ether); substituted acetophenone (e.g., 2,2-dimethoxy-2-phenylacetophenone or 2,2-diethoxyacetophenone); 1-hydroxycyclohexyl phenyl ketone; and acylphosphonate derivatives (e.g., bis(2,4,6-trimethylbenzoyl)phenylphosphine oxide, diphenyl-2,4,6-trimethylbenzoylphosphine oxide, isopropoxyphenyl-2,4,6-trimethylbenzoylphosphine oxide, or dimethyl pivaloylphosphonate). Other useful photoinitiators include those described above in connection with the preparation of polythioethers.

Many photoinitiators are available, for example, from IGM Resins under the trade designation "OMNIRAD." The photoinitiator may be selected, for example, such that it absorbs light having a wavelength greater than 400 nanometers and is compatible in the composition. Two or more of any of these photoinitiators may also be used together in any combination.

In some embodiments, the curable thiol-ene-epoxy adhesive compositions typically include at least 0.5 wt-% of a photoinitiator, based on the total weight of the curable thiol-ene-epoxy adhesive composition. In some embodiments, the curable thiol-ene-epoxy compositions typically include up to 1.0 wt-% of a photoinitiator, based on the total weight of the curable thiol-ene-epoxy adhesive composition.

### Methods and Articles

The curable thiol-ene-epoxy liquid adhesive compositions of the present disclosure are "dual-stage" or "B-stage" adhesive compositions in that they can be partially cured (sometimes referred to as "pre-dried") to an intermediate "B-stage" after being applied onto one substrate/surface, and then further cured (e.g., completely or fully cured) at a later time (e.g., days later by the same or a different party) under the application of thermal energy.

Such compositions are liquid and sufficiently flowable that they can be applied (e.g., by stencil- or screen-printing) to form an image of a desired size and shape. Thus, in certain embodiments, the curable thiol-ene-epoxy liquid adhesive compositions can be used in a method that includes: applying the curable, one-part thiol-ene-epoxy liquid adhesive composition to a substrate (e.g., by stencil- or screen-printing) to form an image; and exposing the curable, one-part, dual-stage thiol-ene-epoxy liquid adhesive to actinic radiation to partially cure the adhesive and form an image comprising a B-stage adhesive.

The initial curing step of the compositions of the present disclosure to form the intermediate B-stage adhesive may be accomplished by exposing the compositions (i.e., adhesives or adhesive composition) to actinic radiation using, for example, LED or UV lights. The B-stage results from the full cure of the ene with the thiol. That is, the extent to which the components react is controlled by the relative amounts of those two components compared to the epoxy.

In certain embodiments, the second curing step involves heating the B-stage adhesive to a temperature of at least 60°C, and often to a temperature of up to 90°C, up to 80°C, up to 70°C, or up to 65°C. In certain embodiments, this involves heating the B-stage adhesive to a temperature of 60-65°C.

In the initial curing stage, preferable actinic radiation includes light sources emitting wavelengths equal to or greater than 350 nm, preferably equal to or greater than 365 nm, and more preferably equal to or greater than 385 nm. Light to polymerize the monomer component(s) can be provided by various light sources such as light emitting diodes (LEDs), black lights, medium pressure mercury lamps, etc. or a combination thereof. The monomer component(s) can also be polymerized with higher intensity light sources as available from Heraeus UV Systems Inc. The exposure time for curing can vary depending on the intensity of the light source(s) used. Further, the wavelength of the light can affect curing because longer wavelengths tend to pass further into the curable composition.

The present disclosure provides articles that include a substrate having the curable, one-part thiol-ene-epoxy adhesive composition disposed on a surface thereof. The composition may form an image (e.g., letters, numbers, indicia, etc.) on the substrate surface. In certain embodiments of such articles, the curable liquid composition has been partially cured such that the thiol-ene-epoxy adhesive composition is in the form of a curable B-stage adhesive. In certain embodiments of such articles, the thiol-ene-epoxy adhesive composition is in the form of a fully cured adhesive.

The substrates on which the curable compositions (e.g., the curable liquid composition, the curable B-stage adhesive, or the cured adhesives formed therefrom) of the present disclosure can be applied (e.g., stencil- or screen-printed) can be flexible or inflexible. They can be formed from a polymeric material, glass, ceramic material, metal, or combination thereof. Some substrates are polymeric films such as those prepared from polyolefins (e.g., polyethylene, polypropylene, or copolymers thereof), polyurethanes, polyvinyl acetates, polyvinyl chlorides, polyesters (polyethylene terephthalate or polyethylene naphthalate), polycarbonates, polymethyl(meth)acrylates (PMMA), ethylenevinyl acetate copolymers, and cellulosic materials (e.g., cellulose acetate, cellulose triacetate, and ethyl cellulose). Other substrates are metal foils, nonwoven materials (e.g., paper, cloth, nonwoven scrims), foams (e.g., polyacrylic, polyethylene, polyurethane, neoprene), and the like. For some substrates, it may be desirable to treat the surface to improve adhesion to the curable composition, cured composition, or both. Such treatments include, for example, application of primer layers, surface modification layer (e.g., corona treatment or surface abrasion), or both. Certain desirable substrates, especially in electronic devices, can be heat sensitive, thus it is important to have a system which can be thermally cured at relatively low temperatures as described herein.

### Exemplary Embodiments

Embodiment 1 is a curable, one-part, dual-cure thiol-ene-epoxy liquid adhesive composition comprising: an epoxy resin component comprising an epoxy resin having at least two epoxide groups per molecule; a thiol component comprising a polythiol compound having at least two (preferably, primary) thiol groups; a nitrogen-containing catalyst for the epoxy resin; a barbituric acid derivative soluble in the thiol-epoxy component of the thiol-ene-epoxy adhesive composition; a non-(meth)acrylate ethylenically unsaturated compound; and a photoinitiator; wherein the nitrogen-containing catalyst is insoluble in the ethylenically unsaturated compound and the polythiol compound separately (per the Solubility Test).

Embodiment 2 is the curable thiol-ene-epoxy adhesive composition of embodiment 1 which is curable at a temperature of at least 60°C. Embodiment 3 is the curable thiol-ene-epoxy adhesive composition of embodiment 1 or 2 which is curable at a temperature of up to 90°C, up to 80°C, up to 70°C, or up to 65°C.

Embodiment 4 is the curable thiol-ene-epoxy adhesive composition of any of the preceding embodiments wherein the epoxy resin comprises a polyglycidyl ether of a polyhydric phenol, a reaction product of a polyhydric alcohol with epichlorohydrin, an epoxidised (poly)olefinic resin, an epoxidised phenolic novolac resin, an epoxidised cresol novolac resin, a cycloaliphatic epoxy resin, a glycidyl ether ester, a polyglycidyl ester, a urethane modified epoxy resin, or a combination of two or more thereof.

Embodiment 5 is the curable thiol-ene-epoxy adhesive composition of any of the preceding embodiments wherein the epoxy component further comprises a reactive diluent. Embodiment 6 is the curable thiol-ene-epoxy adhesive composition of embodiment 5 wherein the reactive diluent has a viscosity of less than 250 mPa·s (cPs). Embodiment 7 is the curable thiol-ene-epoxy adhesive composition of embodiment 5 or 6 wherein the reactive diluent is a monofunctional epoxy resin. Embodiment 8 is the curable thiol-ene-epoxy adhesive composition of embodiment 7 wherein the monofunctional epoxy resin comprises a (C6-C28)alkyl group. Embodiment 9 is the curable thiol-ene-epoxy adhesive composition of embodiment 8 wherein the monofunctional epoxy resin comprises (C6-C28)alkyl glycidyl ethers, (C6-C28)fatty acid glycidyl esters, (C6-C28)alkylphenol glycidyl ethers, or combinations thereof.

Embodiment 10 is the curable thiol-ene-epoxy adhesive composition of any of the preceding embodiments wherein the epoxy resin component is present in an amount of at least 20 wt-%, at least 25 wt-%, at least 30 wt-%, at least 35 wt-%, at least 40 wt-%, or at least 45 wt-%, based on the total weight of the curable thiol-ene-epoxy adhesive composition. Embodiment 11 is the curable thiol-ene-epoxy adhesive composition of any of the preceding embodiments wherein the epoxy resin component is present in an amount of up to 80 w-%, up to 75 wt-%, or up to 70 wt-%, based on the total weight of the curable thiol-ene-epoxy adhesive composition.

Embodiment 12 is the curable thiol-ene-epoxy adhesive composition of any of the preceding embodiments wherein the polythiol compound comprises trimethylolpropane tris(beta-mercaptopropionate), trimethylolpropane tris(thioglycolate), pentaerythritol tetrakis(thioglycolate), pentaerythritol tetrakis(beta-mercaptopropionate), dipentaerythritol poly(beta-mercaptopropionate), ethylene glycol bis(beta-mercaptopropionate), a (C1-C12)alkyl polythiol, a (C6-C12)aromatic polythiol, or a combination of two or more thereof.

Embodiment 13 is the curable thiol-ene-epoxy adhesive composition of any of the preceding embodiments wherein the thiol component is present in an amount of at least 25 wt-%, at least 30 wt-%, or at least 35 wt-%, based on the total weight of the curable thiol-ene-epoxy adhesive composition. Embodiment 14 is the curable thiol-ene-epoxy adhesive composition of any of the preceding embodiments wherein the thiol component is present in an amount of up to 70 wt-%, up to 65 wt-%, up to 60 wt-%, up to 55 wt-%, up to 50 wt-%, up to 45 wt-%, or up to 40 wt-%, based on the total weight of the curable thiol-ene-epoxy adhesive composition.

Embodiment 15 is the curable thiol-ene-epoxy adhesive composition of any of the preceding embodiments wherein the epoxy component and the thiol component are present in a ratio (prior to forming an intermediate B-stage adhesive) of from 0.2:1 to 0.95:1, or 0.3:1 to 0.8:1 (epoxy:thiol equivalents).

Embodiment 16 is the curable thiol-ene-epoxy adhesive composition of any of the preceding embodiments wherein the nitrogen-containing catalyst is solid at room temperature. Embodiment 17 is the curable thiol-ene-epoxy adhesive composition of any of the preceding embodiments wherein the nitrogen-containing catalyst is capable of activation at temperatures at or above 60°C to affect the thermal curing of the epoxy resin.

Embodiment 18 is the curable thiol-ene-epoxy adhesive composition of any of the preceding embodiments wherein the nitrogen-containing catalyst is an amine-containing catalyst. Embodiment 19 is the curable thiol-ene-epoxy adhesive composition of embodiment 18 wherein the amine-containing catalyst has at least two groups of formula -NR²H, wherein R² is selected from hydrogen, alkyl, aryl, alkaryl, or aralkyl. Embodiment 20 is the curable thiol-ene-epoxy adhesive composition of embodiment 19 wherein the amine-containing catalyst comprises a reaction product of phthalic anhydride and an aliphatic polyamine. Embodiment 21 is the curable thiol-ene-epoxy adhesive composition of embodiment 19 wherein the amine-containing catalyst comprises a reaction product of: (i) a polyfunctional epoxy compound; (ii) an imidazole compound, such as 2-ethyl-4-methylimidazole; and (iii) phthalic anhydride. Embodiment 22 is the curable thiol-ene-epoxy adhesive composition of embodiment 19 wherein the amine-containing catalyst comprises a reaction product of a compound having one or more isocyanate groups in its molecule with a compound having at least one primary or secondary amino group in its molecule. Embodiment 23 is the curable thiol-ene-epoxy adhesive composition of embodiment 19 wherein the amine-containing catalyst comprises 2-heptadeoylimidazole, 2-phenyl-4,5-dihydroxymethylimidazole, 2-phenyl-4-methyl-5-hydroxymethylimidazole, 2-phenyl-4-benzyl-5-hydroxymethylimidazole, 2,4-diamino-8-2-methylimidazolyl-(1)-ethyl-5-triazine, or a combination thereof. Embodiment 24 is the curable thiol-ene-epoxy adhesive composition of embodiment 19 wherein the amine-containing catalyst comprises products of triazine with isocyanuric acid, succinohydrazide, adipohydrazide, isophtholohydrazide, o-oxybenzohydrazide, salicylohydrazide, or a combination thereof.

Embodiment 25 is the curable thiol-ene-epoxy adhesive composition of any of the preceding embodiments wherein the nitrogen-containing catalyst is present in the curable thiol-ene-epoxy composition in an amount of at least 0.5 wt-%, at least 1 wt-%, at least 2 wt-%, at least 3 wt-%, at least 4 wt-%, or at least 5 wt-%, based on the total weight of the curable thiol-ene-epoxy adhesive composition. Embodiment 26 is the curable thiol-ene-epoxy adhesive composition of any of the preceding embodiments wherein the nitrogen-containing catalyst is present in the curable thiol-ene-epoxy adhesive composition in an amount of up to 20 wt-%, up to 15 wt-%, or up to 10 wt-%, based on the total weight of the curable thiol-ene-epoxy adhesive composition.

Embodiment 27 is the curable thiol-ene-epoxy adhesive composition of any of the preceding embodiments wherein the barbituric acid derivative is a barbituric acid compound substituted at one or more of the 1, 3, and/or 5 N positions with an aliphatic, cycloaliphatic, or aromatic group. Embodiment 28 is the curable thiol-ene-epoxy adhesive composition of embodiment 27 wherein the barbituric acid derivative is of the Formula (II): 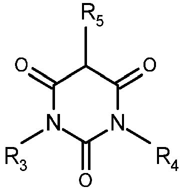 wherein one or more of the R³, R⁴, and R⁵ groups are represented by hydrogen, an aliphatic group, a cycloaliphatic group, or an aromatic group (e.g., phenyl), optionally further substituted in any position with one or more of (C1-C4)alkyl, -OH, halide (F, Br, Cl, I), phenyl, (C1-C4)alkylphenyl, (C1-C4)alkenylphenyl, nitro, or -OR⁶ where R⁶ is phenyl, a carboxylic group, a carbonyl group, or an aromatic group and R⁶ is optionally substituted with (C1-C4)alkyl, -OH, or halide; and further wherein at least one of the R³, R⁴, and R⁵ groups is not hydrogen. In certain embodiments, at least two of the R³, R⁴, and R⁵ groups are not hydrogen. Embodiment 29 is the curable thiol-ene-epoxy adhesive composition of embodiment 28 wherein the barbituric acid derivative is selected from 1-benzyl-5-phenylbarbituric acid, 1-cycloheyl-5-ethylbarbituric acid, 1,3-dimethylbarbituric acid, and a combination thereof.

Embodiment 30 is the curable thiol-ene-epoxy adhesive composition of any of the preceding embodiments wherein the barbituric acid derivative is present in the curable thiol-ene-epoxy adhesive composition in an amount of at least 0.01 wt-%, based on the total weight of the thiol-ene-epoxy adhesive composition. Embodiment 31 is the curable thiol-ene-epoxy adhesive composition of any of the preceding embodiments wherein the barbituric acid derivative is present in the curable thiol-ene-epoxy adhesive compositions in an amount of up to 1 wt-%, based on the total weight of the thiol-ene-epoxy adhesive composition.

Embodiment 32 is the curable thiol-ene-epoxy adhesive composition of any of the preceding embodiments wherein the non-(meth)acrylate ethylenically unsaturated compound comprises one or two ethylenically unsaturated groups and 4 to 30 carbon atoms. Embodiment 33 is the curable thiol-ene-epoxy adhesive composition of embodiment 32 wherein the non-(meth)acrylate ethylenically unsaturated compound comprises one ethylenically unsaturated group and 4 to 18 carbon atoms. Embodiment 34 is the curable thiol-ene-epoxy adhesive composition of embodiment 33 wherein the non-(meth)acrylate ethylenically unsaturated compound comprises an allyl ether, a vinyl ether, or a combination thereof. Embodiment 35 is the curable thiol-ene-epoxy adhesive composition of embodiment 34 wherein the non-(meth)acrylate ethylenically unsaturated compound comprises divinyl ether, ethylene glycol divinyl ether, 1-4-butanediol divinyl ether, 1,6-hexandiol divinylether, diethylene glycol divinyl ether, triethylene glycol divinyl ether, tetraethylene glycol divinyl ether, cyclohexanedimethanol divinyl ether, trimethylolpropane trivinyl ether, pentaerythritol tetravinyl ether, bisphenol A divinyl ether, biphenol F divinyl ether, bisphenol A diallyl ether, bisphenol F diallyl ether, diallyl isocyanurate, triallyl isocyanurate, diallyl cyanurate, triallyl cyanurate, or a combination thereof.

Embodiment 36 is the curable thiol-ene-epoxy adhesive composition of any of the preceding embodiments wherein the non-(meth)acrylate ethylenically unsaturated compound is present in an amount of at least 10 wt-%, at least 20 wt-%, or at least 30 wt-%, based on the total weight of the curable thiol-ene-epoxy adhesive composition. Embodiment 37 is the curable thiol-ene-epoxy adhesive composition of any of the preceding embodiments wherein the non-(meth)acrylate ethylenically unsaturated compound is present in an amount of up to 60 wt-%, up to 50 wt-%, or up to 40 wt-%, based on the total weight of the curable thiol-ene-epoxy adhesive composition.

Embodiment 38 is the curable thiol-ene-epoxy adhesive composition of any of the preceding embodiments wherein the ratio of the non-(meth)acrylate ethylenically unsaturated compound to the polylthiol compound (prior to forming an intermediate B-stage adhesive) is 0.05:1 to 0.8:1, or 0.2:1 to 0.7:1 (ene:thiol equivalents).

Embodiment 39 is the curable thiol-ene-epoxy adhesive composition of any of the preceding embodiments which is capable of forming an intermediate B-stage adhesive having an open time of greater than 2 days, greater than 3 days, greater than 4 days, greater than 5 days, greater than 6 days, greater than 7 days, greater than 2 weeks, greater than 3 weeks, or greater than 4 weeks (determined by DSC per the Open Time Test using a ramp from 0-200°C at a 5°C/min ramp rate).

Embodiment 40 is the curable thiol-ene-epoxy adhesive composition of as embodiments wherein the photoinitiator is a free-radical photoinitiator suitable for curing a polythiol with a second component comprising an unsaturated compound having at least one carbon-carbon double bond and/or carbon-carbon triple bond. Embodiment 41 is the curable thiol-ene-epoxy adhesive composition of embodiment 40 wherein the free-radical photoinitiator is a cleavage-type photoinitiator. Embodiment 42 is the curable thiol-ene-epoxy adhesive composition of embodiment 41 wherein the cleavage-type photoinitiator is selected from acetophenones, alpha-aminoalkylphenones, benzoin ethers, benzoyl oximes, acylphosphine oxides and bisacylphosphine oxides, and mixtures thereof. Embodiment 43 is the curable thiol-ene-epoxy adhesive composition of any of embodiments 40 through 42 which is LED curable. Embodiment 44 is the curable, one-part thiol-ene-epoxy adhesive composition of any of embodiments 40 through 42 which is UV curable.

Embodiment 45 is the curable, one-part thiol-ene-epoxy adhesive composition of any of the preceding embodiments which is stencil- or screen-printable.

Embodiment 46 is an article comprising a substrate having the curable, one-part thiol-ene-epoxy adhesive composition of any one of embodiments 1 through 45 disposed on a surface thereof. Embodiment 47 is the article of embodiment 46 wherein the curable, one-part thiol-ene-epoxy adhesive composition forms an image (e.g., letters, numbers, indicia, etc.) on the substrate surface.

Embodiment 48 is an article comprising a substrate having an intermediate B-stage adhesive disposed on a surface thereof, wherein the intermediate B-stage adhesive is formed from the one-part thiol-ene-epoxy liquid adhesive composition of any one of embodiments 1 through 45.

Embodiment 49 is an article comprising a substrate having a fully cured adhesive disposed on a surface thereof, wherein the fully cured adhesive is formed from the intermediate B-stage adhesive of embodiment 48.

Embodiment 50 is a method of curing a curable thiol-ene-epoxy liquid adhesive composition, the method comprising: providing a curable, one-part thiol-ene-epoxy liquid adhesive composition of any one of embodiments 1 through 45; and exposing the curable, one-part, dual-stage thiol-ene-epoxy liquid adhesive to actinic radiation to partially cure the adhesive and form a B-stage adhesive. Embodiment 51 is the method of embodiment 50 further comprising heating the B-stage adhesive to a temperature of at least 60°C to further cure the adhesive. Embodiment 52 is the method of embodiment 50 or 51 comprising heating the B-stage adhesive to a temperature of up to 90°C, up to 80°C, up to 70°C, or up to 65°C. Embodiment 53 is the method of embodiment 51 or 52 comprising heating the B-stage adhesive to a temperature of 60-65°C.

Embodiment 54 is a method of printing a curable thiol-ene-epoxy liquid adhesive composition, the method comprising: providing a curable, one-part thiol-ene-epoxy liquid adhesive composition of any one of embodiments 1 through 45; applying the curable, one-part thiol-ene-epoxy liquid adhesive composition to a substrate (e.g., by a printing process such as stencil- or screen-printing) to form an image; and exposing the curable, one-part, dual-stage thiol-ene-epoxy liquid adhesive to actinic radiation to partially cure the adhesive and form an image comprising a B-stage adhesive. Embodiment 55 is the method of embodiment 54 further comprising heating the B-stage adhesive to a temperature of at least 60°C to further cure the adhesive. Embodiment 56 is the method of embodiment 54 or 55 comprising heating the B-stage adhesive to a temperature of up to 90°C, up to 80°C, up to 70°C, or up to 65°C. Embodiment 57 is the method of embodiment 55 or 56 comprising heating the B-stage adhesive to a temperature of 60-65°C.

### Examples

Objects and advantages of this disclosure are further illustrated by the following non-limiting examples, but the particular materials and amounts thereof recited in these examples, as well as other conditions and details, should not be construed to unduly limit this disclosure.

Unless otherwise noted, all parts, percentages, ratios, etc. in the Examples and the rest of the specification are by weight.

### General reagents:

| RM | Role/relevant functional group | Supplier |
|---|---|---|
| EPALLOY 8250 | Epoxy | Huntsman, The Woodlands, TX |
| B-tough A2 | reactive toughener | Croda Inc., Princeton, New Jersey |
| Kane Ace MX 150 | CSR toughener | Kaneka North America LLC, Pasadena, TX |
| Barbituric acid | Inhibitor | CBC Co., Ltd., Tokyo, Japan |
| Lucirin TPO-L | Photoinitiator | BASF, Ludwigshafen, Germany |
| Omnirad 819 | Photoinitiator | IGM, Charlotte, NC |
| H18 | thixotrope/functionalized silica | Wacker Chemie AG, Munich, Germany |

### Thiols:

| RM/abbrev. | RM | Supplier |
|---|---|---|
| Thiocure PEMP | pentaerythritol tetra 3-mercaptopropionate | Bruno Bock, Marschacht, Germany |
| Thiocure TEMPIC | tris[2-(3-mercaptopropionyloxy)ethyl] isocyanurate | Bruno Bock, Marschacht, Germany |
| Thiocure 430 TMPMP | trimethylolpropane tri(3-mercaptopropionate) | Bruno Bock, Marschacht, Germany |

### Latent amines/catalysts:

| RM | Supplier |
|---|---|
| FRX 1201 | T&K Toka, Saitama, Japan |
| Ajicure PN 40 | Ajinomoto Fine-Techno Co., Inc., Kawasaki, Japan |
| Ajicure PN 40J | Ajinomoto Fine-Techno Co., Inc., Kawasaki, Japan |
| Ajicure PN 23J | Ajinomoto Fine-Techno Co., Inc., Kawasaki, Japan |

### Enes:

| RM/abbrev. | RM | Supplier |
|---|---|---|
| DAEBPA | diallyl ether bis-phenol A | Bimax, Inc., Glen Rock, PA |
| DEGDVE | diethyleneglycol divinylether | BASF, Ludwigshafen, Germany |
| TAICROS | tri-allyl isocyanurate | Evonik Industries, Essen, Germany |
| CHDVE | cyclohexanedimethanoldivinylether | BASF, Ludwigshafen, Germany |
| BDVE | butanediol divinylether | BASF, Ludwigshafen, Germany |
| APE | allyl pentaerythritol | Perstorp Specialty Chemical, Malmo, Sweden |
| DVA | divinyl adipate | TCI Co., Ltd., Tokyo, Japan |
| TMPDE | trimethylolpropane diallylether | Perstorp Specialty Chemical, Malmo, Sweden |

### Test Methods

### Stabilizer Solubility Test

Barbituric acid derivatives may be tested for solubility in a thiol-epoxy portion of a thiol-ene-epoxy resin composition according to the following method in a manner similar to those tested for solubility in epoxy/thiol resin compositions in International Publication No. WO 2018/109617 (3M Company) with similar results. Stabilizer solubility is evaluated by means of optical transmission and clarity using a BYK GARDNER HAZE-GARD PLUS (BYK Gardner, Silver Spring, Maryland). The instrument is referenced against air during the measurements. For transmission and clarity measurements of the uncured resins, a Teflon spacer is mounted between two clean glass microscope slides, having an average thickness of 0.039 inch (0.99 mm), such that the spacer is outside the optical measurement area, creating a gap of approximately 0.072 inch (1.83 mm) into which individual samples of stabilizer-containing resins are placed. Clamps, also mounted outside the measurement area, are used to hold the glass pieces tightly to the spacer and ensure that the gap spacing is restricted to the thickness of the spacer. Five individual measurements of the transmission, haze, and clarity are taken on each of the liquid resin samples. The average percent transmission and clarity are reported. For clarity it is desirable to have values of 80%, 85%, 90% or even 95% or higher. For transmission it is desirable to have values of 80%, 85%, or even 90% or higher.

### Printing, B-staging of Adhesives, Open Time Test, and Overlap Shear Test

The fully formulated mixed adhesives were stencil-printed using a DDM Novastar SPR-45 stencil printer (Ivyland, PA) with an elastomeric squeegee on a 0.254 mm stencil, providing a 2.54 cm x 1.27 cm image of adhesive. A 16-mm thick silicone rubber sheet with three 2.54 cm x 20.32 cm slots with 2.54 cm spacing was used to hold 2.54 cm x 10.16 cm x 0.16 cm aluminum coupons in place during the printing process. Aluminum coupons (Joseph T. Ryerson and Son, Inc., Coon Rapids, MN) with the dimensions 2.54 cm x 10.16 cm x 0.16 cm were prepared by cleaning with methyl ethyl ketone (MEK), then abrading the bonding area by grit-blasting with alumina grit. For one sample set, Kraft paper was placed over the aluminum coupons and the pattern was printed on the Kraft paper. After printing, all adhesive samples were B-staged by exposure to 1 Joule (J) of 385 nanometers (nm) irradiation using an LED lamp attached to a conveyer system.

One set of aluminum samples was bonded immediately after B-staging to a second 2.54 cm x 10.16 cm aluminum coupon with a 1.27 cm overlap, where the bonded section was clamped with binder clips. These samples were cured at 70°C for 1 hour, after which the binder clips were removed. Testing for overlap shear was run on a 5,620 lb (25 kN) load cell for aluminum samples. The overlap shear samples were run at 2.54 mm /min. The peak stress values (MPa) were reported as an average of three specimens. Additional samples were bonded after 48 and 96 hours, post-cured, and tested similarly.

The adhesive images on the Kraft paper were used to monitor the post cure of the adhesive by DSC (Q2000, TA Instruments, New Castle, Delaware) to determine the open time of the B-stage adhesive. Samples of 5-10 mg of adhesive were weighed into hermetic aluminum pans and the exotherm of the reaction was measured using a ramp from 0-200°C at a 5°C/minute ramp rate.

### Solubility Test (of Resins with Catalysts):

Small glass vials were charged with approximately 5 grams (g) of resin. Approximately 1 g of powdered, latent amine catalyst was added to the vial. These were placed on a shaker table for 48 hours at room temperature and then checked qualitatively by visual inspection for solubility. Numbers were assigned ranging from complete solubility (5) to insoluble dispersed powder (1) or (2). Typically, (3) and (4) ratings were assigned to either more viscous or homogenous solutions wherein the catalysts were more soluble. Some samples were not soluble but became gummy (e.g., forming a gel), and were also assigned a value of (5). Suitable combinations were rated (1) or (2) and considered "insoluble." **Figure 1** shows photographs of exemplary ratings (1) through (5). **Table 1** shows the results of this screening:

**Table 1. Relative catalyst solubility**

| | 1201 | PN40 | PN40J | PN23J |
|---|---|---|---|---|
| DAEBPA | 5 | 5 | 5 | 4 |
| DEGDVE | 4 | 3 | 3 | 1 |
| TAICROS | 3 | 4 | 3 | 1 |
| CHDVE | 1 | 2 | 1 | 1 |
| BDVE | 1 | 1 | 1 | 5 |
| APE | 1 | 2 | 1 | 1 |
| DVA | 5 | 5 | 5 | 5 |
| TMPDE | 2 | 2 | 1 | 1 |
| | | | | |
| PEMP | 2 | 3 | 3 | 1 |
| TEMPIC | 4 | 4 | 3 | 2 |
| TMPMP | 2 | 3 | 3 | 1 |

| | | | | |
|---|---|---|---|---|
| 5 = most soluble; 1 = least soluble | | | | |

### Preparatory Examples

### Method to prepare adhesives:

### Base-epoxy/ene/photocatalyst:

A stock blend of the epoxy resins was prepared by mixing components in a max 300 DAC cup.

This stock was weighed into black DAC mixer cups and the stabilizer, vinyl, or allyl ether, thermoplastic, photocatalysts and fillers were added and mixed on a DAC Speedmixer (DAC 600 FVZ, Hauschild SpeedMixer, Dallas, TX) at 1750 rpm for 2x1 minute and then degassed using a DAC vacuum Speedmixer (DAC 600.2 VAC-P, Hauschild SpeedMixer, Dallas, TX) at 1750 rpm for 2 minutes at 4.9 kPA.

### Accelerator-thiol/thermal catalyst:

The thiol and any filler were weighed in DAC Speedmixer cups and mixed and subsequently degassed as described above. After this blend cooled, the latent catalyst was added and then mixed while degassing at lower speed, 1500 rpm for 2 minutes, at 4.9 kPa to avoid warming the material.

### Full formulation of adhesive:

A given amount of the base adhesive was weighed into a black DAC mixer cup and the accelerator was added in an amount where the equivalents of thiol was equal to the equivalents of epoxy and ene resins. The liquids were mixed at low speed in DAC Speedmixer (1500 rpm for 30-45 seconds) to avoid warming the blend.

### Formulations:

| Sample | Epalloy 8250 | Croda B-tough A2 | MX 150 | 5% Barb Acid | BDVE | DEGDVE | H18 | TPO-L | Omnirad 819 |
|---|---|---|---|---|---|---|---|---|---|
| B1 | 24.3 | 13.2 | 27.7 | 5.9 | | 22.8 | 4.3 | 0.25 | 1.5 |
| B2 | 24.3 | 13.2 | 27.7 | 5.9 | 22.8 | | 4.3 | 0.25 | 1.5 |

| Sample | Epalloy 8250 | Croda B-tough A2 | MX 150 | 5% Barb Acid | DAEBPA | DVA | H18 | TPO-L | Omnira d 819 |
|---|---|---|---|---|---|---|---|---|---|
| B3 | 19.1 | 10.4 | 21.6 | 5.7 | | 37.5 | 3.9 | .25 | 1.5 |
| B4 | 15.6 | 8.5 | 17.8 | 5.7 | 46.8 | | 3.9 | .25 | 1.5 |

| Sample | TEMPIC | TMPMP | PEMP | H18 | FXR 1201 |
|---|---|---|---|---|---|
| A1 | | 84.6 | | 6.3 | 9.1 |
| A2 | 84.6 | | | 6.3 | 9.1 |

### Mix Ratios:

| | **A1(g)** | **A2 (g)** | **B1 (g)** | **B2 (g)** | **B3 (g)** | **B4(g)** |
|---|---|---|---|---|---|---|
| **Ex 1** | 15 | -- | 16.1 | -- | | |
| **Ex 2** | 15 | -- | -- | 15.2 | | |
| **CE 1** | -- | 15 | 7.7 | -- | | |
| **CE 2** | -- | 15 | -- | 7.3 | | |
| **CE3** | | 15 | | | 7.3 | |
| **CE4** | | 15 | | | | 8.9 |

The DSC results are shown for samples after various times after B-staging in **Table 2.** The DSC data shows that resin combinations that show low solubility of an amine catalyst provide better shelf-life after B-staging (less change in total exotherm) than adhesive with resins that show greater solubility. The comparative examples show that a combination of thiols and enes with high solubility of the catalyst show the greatest decrease in exotherm.

**Table 2. DCS Results**

| Sample | Time | Onset (°C) | Peak (°C) | Exotherm (J/g) |
|---|---|---|---|---|
| Ex 1 | 0 | 81.8 | 92.3 | 186.6 |
| | 48 hrs | 83.4 | 92.8 | 190.2 |
| | 96 hrs | 84.3 | 93.9 | 189.9 |
| | 288 hrs | 81.6 | 95.5 | 182.5 |
| | 792 hrs | 74.4 | 95.7 | 169.8 |
| Ex 2 | 0 | 80.5 | 90 | 184.4 |
| | 48 hrs | 80.8 | 90.2 | 187.8 |
| | 96 hrs | 81.09 | 90.8 | 183.5 |
| | 288 hrs | 78.1 | 92 | 179.4 |
| | 792 hrs | 73.5 | 94.6 | 155.5 |
| CE 1 | 0 | 86.91 | 95.2 | 163.6 |
| | 48 hrs | 82.65 | 91.07 | 161.5 |
| | 96 hrs | 83.41 | 95.47 | 152.3 |
| | 600 hrs | 78.64 | 93.86 | 118.7 |
| CE 2 | 0 | 82.85 | 90.47 | 164.5 |
| | 48 hrs | 80.5 | 89.22 | 165.3 |
| | 96 hrs | 79.97 | 89.03 | 153.7 |
| | 600 hrs | 88.21 | 98.55 | 77.35 |
| CE 3 | 0 | 92.05 | 102.7 | 105.3 |
| | 48 hrs | 91.48 | 102.34 | 101.5 |
| | 96 hrs | 90.9 | 102.95 | 95.6 |
| | 600 hrs | 90.62 | 102.86 | 85.72 |
| CE 4 | 0 | 89.93 | 100.15 | 106.0 |
| | 48 hrs | 94.86 | 105.49 | 108.6 |
| | 96 hrs | 96.93 | 109.41 | 94.8 |
| | 600 hrs | 88.84 | 108.26 | 72.05 |

The overlap shear (OLS) values for the adhesives bonded initially and after 48 and 96 hours are shown in **Table 3.** This demonstrates that there is no change in adhesive performance even following 96 hours of B-staging the adhesive prior to bonding and post-curing.

**Table 3. OLS Test Results**

| Sample | Time in the B-stage state | Ave of 3 replicates (MPa) |
|---|---|---|
| Ex 1 | 0 | 7.03 |
| | 48 hrs | 7.67 |
| | 96 hrs | 6.97 |
| Ex 2 | 0 | 6.08 |
| | 48 hrs | 6.13 |
| | 96 hrs | 6.02 |

## Claims

1. A curable, one-part, dual-stage thiol-ene-epoxy liquid adhesive composition comprising:
an epoxy resin component comprising an epoxy resin having at least two epoxide groups per molecule;
a thiol component comprising a polythiol compound having at least two thiol groups;
a nitrogen-containing catalyst for the epoxy resin;
a barbituric acid derivative soluble in the thiol-epoxy component of the thiol-ene-epoxy adhesive composition as assessed by the method described in the present description;
a non-(meth)acrylate ethylenically unsaturated compound; and
a photoinitiator;
wherein the nitrogen-containing catalyst is insoluble in the ethylenically unsaturated compound and the polythiol compound separately as assessed by the method described in the present description.

2. The curable thiol-ene-epoxy adhesive composition of claim 1, wherein the epoxy resin comprises a polyglycidyl ether of a polyhydric phenol, a reaction product of a polyhydric alcohol with epichlorohydrin, an epoxidised (poly)olefinic resin, an epoxidised phenolic novolac resin, an epoxidised cresol novolac resin, a cycloaliphatic epoxy resin, a glycidyl ether ester, a polyglycidyl ester, a urethane modified epoxy resin, or a combination of two or more thereof.

3. The curable thiol-ene-epoxy adhesive composition of any of the preceding claims, wherein the epoxy component further comprises a reactive diluent.

4. The curable thiol-ene-epoxy adhesive composition of any of the preceding claims, wherein the polythiol compound comprises trimethylolpropane tris(beta-mercaptopropionate), trimethylolpropane tris(thioglycolate), pentaerythritol tetrakis(thioglycolate), pentaerythritol tetrakis(beta-mercaptopropionate), dipentaerythritol poly(beta-mercaptopropionate), ethylene glycol bis(beta-mercaptopropionate), a C₁-C₁₂alkyl polythiol, a C₆-C₁₂aromatic polythiol, or a combination of two or more thereof.

5. The curable thiol-ene-epoxy adhesive composition of any of the preceding claims, wherein the nitrogen-containing catalyst is capable of activation at temperatures at or above 60ºC to affect the thermal curing of the epoxy resin.

6. The curable thiol-ene-epoxy adhesive composition of any of the preceding claims, wherein the nitrogen-containing catalyst is an amine-containing catalyst.

7. The curable thiol-ene-epoxy adhesive composition of any of the preceding claims, wherein the barbituric acid derivative is a barbituric acid compound substituted at one or more of the 1, 3, and/or 5 N positions with an aliphatic, cycloaliphatic, or aromatic group.

8. The curable thiol-ene-epoxy adhesive composition of claim 7, wherein the barbituric acid derivative is selected from 1-benzyl-5-phenylbarbituric acid, 1-cycloheyl-5-ethylbarbituric acid, 1,3-dimethylbarbituric acid, and a combination thereof.

9. The curable thiol-ene-epoxy adhesive composition of any of the preceding claims, wherein the non-(meth)acrylate ethylenically unsaturated compound comprises divinyl ether, ethylene glycol divinyl ether, 1-4-butanediol divinyl ether, 1,6-hexandiol divinylether, diethylene glycol divinyl ether, triethylene glycol divinyl ether, tetraethylene glycol divinyl ether, cyclohexanedimethanol divinyl ether, trimethylolpropane trivinyl ether, pentaerythritol tetravinyl ether, bisphenol A divinyl ether, bisphenol F divinyl ether, bisphenol A diallyl ether, bisphenol F diallyl ether, diallyl isocyanurate, triallyl isocyanurate, diallyl cyanurate, triallyl cyanurate, or a combination thereof.

10. The curable thiol-ene-epoxy adhesive composition of any of the preceding claims, wherein the epoxy resin component is present in the curable thiol-ene-epoxy adhesive composition in an amount of 20 wt-% to 80 wt-%, wherein the thiol component is present in the curable thiol-ene-epoxy adhesive composition in an amount of 25 wt-% to 70 wt-%, wherein the nitrogen-containing catalyst is present in the curable thiol-ene-epoxy composition in an amount of 0.5 wt-% to 20 wt-%, wherein the non-(meth)acrylate ethylenically unsaturated compound is present in the curable thiol-ene-epoxy adhesive composition in an amount of 10 wt-% to 60 wt-%, and wherein the barbituric acid derivative is present in the curable thiol-ene-epoxy adhesive composition in an amount of 0.01 wt-% to 1 wt-%, based on the total weight of the curable thiol-ene-epoxy adhesive composition.

11. The curable thiol-ene-epoxy adhesive composition of any of the preceding claims. wherein the non-(meth)acrylate ethylenically unsaturated compound and the polylthiol compound are present in a ratio of from 0.05:1 to 0.8:1 (ene:thiol equivalents) and wherein the epoxy component and the thiol component are present in a ratio of from 0.2:1 to 0.95 (epoxy:thiol equivalents).

12. An article comprising a substrate having the curable, one-part thiol-ene-epoxy liquid adhesive composition of any one of claims 1 through 11 disposed on a surface thereof.

13. A method of curing an adhesive composition, the method comprises:
providing a curable, one-part, dual-stage thiol-ene-epoxy liquid adhesive composition comprising:
an epoxy resin component comprising an epoxy resin having at least two epoxide groups per molecule;
a thiol component comprising a polythiol compound having at least two thiol groups;
a nitrogen-containing catalyst for the epoxy resin;
a barbituric acid derivative soluble in the thiol-epoxy component of the thiol-ene-epoxy adhesive composition as assessed by the method described in the present description;
a non-(meth)acrylate ethylenically unsaturated compound; wherein the nitrogen-containing catalyst is insoluble in the ethylenically unsaturated compound and polythiol compound separately as assessed by the method described in the present description; and
a photoinitiator; and
exposing the curable, one-part, dual-stage thiol-ene-epoxy liquid adhesive to actinic radiation to partially cure the liquid adhesive and form a B-stage adhesive.

14. The method of claim 13 further comprising heating the B-stage adhesive to a temperature of at least 60ºC, up to 90 ºC, or in a range from 60ºC to 65ºC to further cure the adhesive.

15. The method of claim 13, further comprising:
applying the curable, one-part thiol-ene-epoxy liquid adhesive composition to a substrate to form an image, wherein applying the curable, one-part thiol-ene-epoxy liquid adhesive composition to a substrate comprises applying the composition by stencil- or screen-printing to form an image.

## Patentansprüche

1. Eine härtbare, einteilige, zweistufige Thiol-En-Epoxidflüssigklebstoffzusammensetzung, umfassend:
eine Epoxidharzkomponente, umfassend ein Epoxidharz, das mindestens zwei Epoxidgruppen pro Molekül aufweist;
eine Thiolkomponente, umfassend eine Polythiolverbindung, die mindestens zwei Thiolgruppen aufweist;
einen stickstoffhaltigen Katalysator für das Epoxidharz;
ein Barbitursäurederivat, das in der Thiol-Epoxidkomponente der Thiol-En-Epoxidklebstoffzusammensetzung löslich ist, wie durch das in der vorliegenden Beschreibung beschriebene Verfahren ermittelt;
eine ethylenisch ungesättigte Nicht-(Meth)acrylatverbindung; und
einen Photoinitiator;
wobei der stickstoffhaltige Katalysator in der ethylenisch ungesättigten Verbindung und der Polythiolverbindung getrennt unlöslich ist, wie durch das in der vorliegenden Beschreibung beschriebene Verfahren ermittelt.

2. Die härtbare Thiol-En-Epoxidklebstoffzusammensetzung nach Anspruch 1, wobei das Epoxidharz einen Polyglycidylether eines mehrwertigen Phenols, ein Reaktionsprodukt eines mehrwertigen Alkohols mit Epichlorhydrin, ein epoxidiertes (Poly)olefinharz, ein epoxidiertes Phenolnovolakharz, ein epoxidiertes Cresolnovolakharz, ein cycloaliphatisches Epoxidharz, einen Glycidyletherester, einen Polyglycidylester, ein urethanmodifiziertes Epoxidharz oder eine Kombination von zwei oder mehr davon umfasst.

3. Die härtbare Thiol-En-Epoxidklebstoffzusammensetzung nach einem der vorstehenden Ansprüche, wobei die Epoxidkomponente ferner ein reaktives Verdünnungsmittel umfasst.

4. Die härtbare Thiol-En-Epoxidklebstoffzusammensetzung nach einem der vorstehenden Ansprüche, wobei die Polythiolverbindung Trimethylolpropantris(beta-mercaptopropionat), Trimethylolpropantris(thioglycolat), Pentaerythritoltetrakis(thioglycolat), Pentaerythritoltetrakis(beta-mercaptopropionat), Dipentaerythritolpoly(beta-mercaptopropionat), Ethylenglycolbis(beta-mercaptopropionat), ein C₁-C₁₂-Alkylpolythiol, ein aromatisches C₆-C₁₂-Polythiol oder eine Kombination von zwei oder mehr davon umfasst.

5. Die härtbare Thiol-En-Epoxidklebstoffzusammensetzung nach einem der vorstehenden Ansprüche, wobei der stickstoffhaltige Katalysator zu einer Aktivierung bei Temperaturen von 60 °C oder darüber in der Lage ist, um die thermische Aushärtung des Epoxidharzes zu bewirken.

6. Die härtbare Thiol-En-Epoxidklebstoffzusammensetzung nach einem der vorstehenden Ansprüche, wobei der stickstoffhaltige Katalysator ein aminhaltiger Katalysator ist.

7. Die härtbare Thiol-En-Epoxidklebstoffzusammensetzung nach einem der vorstehenden Ansprüche, wobei das Barbitursäurederivat eine Barbitursäureverbindung ist, die an einer oder mehreren der N-Positionen 1, 3 und/oder 5 mit einer aliphatischen, cycloaliphatischen oder aromatischen Gruppe substituiert ist.

8. Die härtbare Thiol-En-Epoxidklebstoffzusammensetzung nach Anspruch 7, wobei das Barbitursäurederivat aus 1-Benzyl-5-phenylbarbitursäure, 1-Cyclohexyl-5-ethylbarbitursäure, 1,3-Dimethylbarbitursäure und einer Kombination davon ausgewählt ist.

9. Die härtbare Thiol-En-Epoxidklebstoffzusammensetzung nach einem der vorstehenden Ansprüche, wobei die ethylenisch ungesättigte Nicht-(Meth)acrylatverbindung Divinylether, Ethylenglycoldivinylether, 1-4-Butandioldivinylether, 1,6-Hexandioldivinylether, Diethylenglycoldivinylether, Triethylenglycoldivinylether, Tetraethylenglycoldivinylether, Cyclohexandimethanoldivinylether, Trimethylolpropantrivinylether, Pentaerythritoltetravinylether, Bisphenol-A-Divinylether, Bisphenol-F-Divinylether, Bisphenol-A-Diallylether, Bisphenol-F-Diallylether, Diallylisocyanurat, Triallylisocyanurat, Diallylcyanurat, Triallylcyanurat oder eine Kombination davon umfasst.

10. Die härtbare Thiol-En-Epoxidklebstoffzusammensetzung nach einem der vorstehenden Ansprüche, wobei die Epoxidharzkomponente in der härtbaren Thiol-En-Epoxidklebstoffzusammensetzung in einer Menge von 20 Gew.-% bis 80 Gew.-% vorhanden ist, wobei die Thiolkomponente in der härtbaren Thiol-En-Epoxidklebstoffzusammensetzung in einer Menge von 25 Gew.-% bis 70 Gew.-% vorhanden ist, wobei der stickstoffhaltige Katalysator in der härtbaren Thiol-En-Epoxidzusammensetzung in einer Menge von 0,5 Gew.-% bis 20 Gew.-% vorhanden ist, wobei die ethylenisch ungesättigte Nicht-(Meth)acrylatverbindung in der härtbaren Thiol-En-Epoxidklebstoffzusammensetzung in einer Menge von 10 Gew.-% bis 60 Gew.-% vorhanden ist und wobei das Barbitursäurederivat in der härtbaren Thiol-En-Epoxidklebstoffzusammensetzung in einer Menge von 0,01 Gew.-% bis 1 Gew.-% vorhanden ist, basierend auf dem Gesamtgewicht der härtbaren Thiol-En-Epoxidklebstoffzusammensetzung.

11. Die härtbare Thiol-En-Epoxidklebstoffzusammensetzung nach einem der vorstehenden Ansprüche, wobei die ethylenisch ungesättigte Nicht-(Meth)acrylatverbindung und die Polythiolverbindung in einem Verhältnis von 0,05 : 1 bis 0,8 : 1 (En : Thiol-Äquivalente) vorhanden sind und wobei die Epoxidkomponente und die Thiolkomponente in einem Verhältnis von 0,2 : 1 bis 0,95 (Epoxid : Thiol-Äquivalente) vorhanden sind.

12. Ein Gegenstand, umfassend ein Substrat, das die härtbare, einteilige Thiol-En-Epoxidflüssigklebstoffzusammensetzung nach einem der Ansprüche 1 bis 11 auf einer Oberfläche davon angeordnet aufweist.

13. Ein Verfahren zum Aushärten einer Klebstoffzusammensetzung, wobei das Verfahren umfasst:
Bereitstellen einer härtbaren, einteiligen, zweistufigen Thiol-En-Epoxidflüssigklebstoffzusammensetzung, umfassend:
eine Epoxidharzkomponente, umfassend ein Epoxidharz, das mindestens zwei Epoxidgruppen pro Molekül aufweist;
eine Thiolkomponente, umfassend eine Polythiolverbindung, die mindestens zwei Thiolgruppen aufweist;
einen stickstoffhaltigen Katalysator für das Epoxidharz;
ein Barbitursäurederivat, das in der Thiol-Epoxidkomponente der Thiol-En-Epoxidklebstoffzusammensetzung löslich ist, wie durch das in der vorliegenden Beschreibung beschriebene Verfahren ermittelt;
eine ethylenisch ungesättigte Nicht-(Meth)acrylatverbindung; wobei der stickstoffhaltige Katalysator in der ethylenisch ungesättigten Verbindung und der Polythiolverbindung getrennt unlöslich ist, wie durch das in der vorliegenden Beschreibung beschriebene Verfahren ermittelt; und
einen Photoinitiator; und
Aussetzen des härtbaren, einteiligen, zweistufigen Thiol-En-Epoxidflüssigklebstoffs gegenüber aktinischer Strahlung, um den Flüssigklebstoff teilweise zu härten und einen Klebstoff im B-Zustand zu bilden.

14. Das Verfahren nach Anspruch 13, ferner umfassend ein Erwärmen des Klebstoffs im B-Zustand auf eine Temperatur von mindestens 60 °C, bis zu 90 °C oder in einem Bereich von 60 °C bis 65 °C, um den Klebstoff weiter zu härten.

15. Das Verfahren nach Anspruch 13, ferner umfassend:
Auftragen der härtbaren, einteiligen Thiol-En-Epoxidflüssigklebstoffzusammensetzung auf ein Substrat, um ein Bild zu bilden, wobei das Auftragen der härtbaren, einteiligen Thiol-En-Epoxidflüssigklebstoffzusammensetzung auf ein Substrat das Auftragen der Zusammensetzung durch Schablonen- oder Siebdruck umfasst, um ein Bild zu bilden.

## Revendications

1. Composition adhésive liquide thiol-ène-époxy durcissable, en une partie, à deux étapes, comprenant :
un composant résine époxy comprenant une résine époxy ayant au moins deux groupes époxyde par molécule ;
un composant thiol comprenant un composé polythiol ayant au moins deux groupes thiol ;
un catalyseur contenant de l'azote pour la résine époxy ;
un dérivé d'acide barbiturique soluble dans le composant thiol-époxy de la composition adhésive thiol-ène-époxy comme évalué par le procédé décrit dans la présente description ;
un composé à insaturation éthylénique non-(méth)acrylate ; et
un photoinitiateur ;
dans laquelle le catalyseur contenant de l'azote est insoluble dans le composé à insaturation éthylénique et le composé polythiol séparément comme évalué par le procédé décrit dans la présente description.

2. Composition adhésive thiol-ène-époxy durcissable selon la revendication 1, dans laquelle la résine époxy comprend un éther polyglycidylique d'un phénol polyhydrique, un produit de réaction d'un alcool polyhydrique avec de l'épichlorhydrine, une résine (poly)oléfinique époxydée, une résine novolac phénolique époxydée, une résine novolac de crésol époxydée, une résine époxy cycloaliphatique, un ester d'éther glycidylique, un ester polyglycidylique, une résine époxy à modification uréthane, ou une combinaison de deux de ceux-ci ou plus.

3. Composition adhésive thiol-ène-époxy durcissable selon l'une quelconque des revendications précédentes, dans laquelle le composant époxy comprend en outre un diluant réactif.

4. Composition adhésive thiol-ène-époxy durcissable selon l'une quelconque des revendications précédentes, dans laquelle le composé polythiol comprend tris(bêta-mercaptopropionate) de triméthylolpropane, tris(thioglycolate) de triméthylolpropane, tétrakis(thioglycolate) de pentaérythritol, tétrakis(bêta-mercaptopropionate) de pentaérythritol, poly(bêta-mercaptopropionate) de dipentaérythritol, bis(bêta-mercaptopropionate) d'éthylène glycol, un polythiol d'alkyl en C₁ à C₁₂, un polythiol aromatique en C₆ à C₁₂, ou une combinaison de deux de ceux-ci ou plus.

5. Composition adhésive thiol-ène-époxy durcissable selon l'une quelconque des revendications précédentes, dans laquelle le catalyseur contenant de l'azote est capable d'activation à des températures égales ou supérieures 60 °C pour influencer le durcissement thermique de la résine époxy.

6. Composition adhésive thiol-ène-époxy durcissable selon l'une quelconque des revendications précédentes, dans laquelle le catalyseur contenant de l'azote est un catalyseur contenant une amine.

7. Composition adhésive thiol-ène-époxy durcissable selon l'une quelconque des revendications précédentes, dans laquelle le dérivé d'acide barbiturique est un composé d'acide barbiturique substitué au niveau d'une ou plusieurs des positions 1, 3, et/ou 5 N par un groupe aliphatique, cycloaliphatique ou aromatique.

8. Composition adhésive thiol-ène-époxy durcissable selon la revendication 7, dans laquelle le dérivé d'acide barbiturique est choisi parmi acide 1-benzyl-5-phénylbarbiturique, acide 1-cycloheyl-5-éthylbarbiturique, acide 1,3-diméthylbarbiturique, et une combinaison de ceux-ci.

9. Composition adhésive thiol-ène-époxy durcissable selon l'une quelconque des revendications précédentes, dans laquelle le composé à insaturation éthylénique non-(méth)acrylate comprend éther divinylique, éther divinylique d'éthylène glycol, éther divinylique de 1-4-butane-diol, éther divinylique de 1,6-hexane-diol, éther divinylique de diéthylène glycol, éther divinylique de triéthylène glycol, éther divinylique de tétraéthylène glycol, éther divinylique de cyclohexanediméthanol, éther trivinylique de triméthylolpropane, éther tétravinylique de pentaérythritol, éther divinylique de bisphénol A, éther divinylique de bisphénol F, éther diallylique de bisphénol A, éther diallylique de bisphénol F, isocyanurate de diallyle, isocyanurate de triallyle, cyanurate de diallyle, cyanurate de triallyle, ou une combinaison de ceux-ci.

10. Composition adhésive thiol-ène-époxy durcissable selon l'une quelconque des revendications précédentes, dans laquelle le composant résine époxy est présent dans la composition adhésive thiol-ène-époxy durcissable en une quantité de 20 % en poids à 80 % en poids, dans laquelle le composant thiol est présent dans la composition adhésive thiol-ène-époxy durcissable en une quantité de 25 % en poids à 70 % en poids, dans laquelle le catalyseur contenant de l'azote est présent dans la composition thiol-ène-époxy durcissable en une quantité de 0,5 % en poids à 20 % en poids, dans laquelle le composé à insaturation éthylénique non-(méth)acrylate est présent dans la composition adhésive thiol-ène-époxy durcissable en une quantité de 10 % en poids à 60 % en poids, et dans laquelle le dérivé d'acide barbiturique est présent dans la composition adhésive thiol-ène-époxy durcissable en une quantité de 0,01 % en poids à 1 % en poids, en fonction du poids total de la composition adhésive thiol-ène-époxy durcissable.

11. Composition adhésive thiol-ène-époxy durcissable selon l'une quelconque des revendications précédentes, dans laquelle le composé à insaturation éthylénique non-(méth)acrylate et le composé polythiol sont présents dans un rapport allant de 0,05:1 à 0,8:1 (équivalents ène:thiol) et dans laquelle le composant époxy et le composant thiol sont présents dans un rapport allant de 0,2:1 à 0,95 (équivalents époxy:thiol).

12. Article comprenant un substrat ayant la composition adhésive liquide thiol-ène-époxy durcissable, en une partie selon l'une quelconque des revendications 1 à 11 disposée sur une surface de celui-ci.

13. Procédé de durcissement d'une composition adhésive, le procédé comprenant :
la fourniture d'une composition adhésive liquide thiol-ène-époxy durcissable, en une partie, à deux étapes, comprenant :
un composant résine époxy comprenant une résine époxy ayant au moins deux groupes époxyde par molécule ;
un composant thiol comprenant un composé polythiol ayant au moins deux groupes thiol ;
un catalyseur contenant de l'azote pour la résine époxy ;
un dérivé d'acide barbiturique soluble dans le composant thiol-époxy de la composition adhésive thiol-ène-époxy comme évalué par le procédé décrit dans la présente description ;
un composé à insaturation éthylénique non-(méth)acrylate ; dans laquelle le catalyseur contenant de l'azote est insoluble dans le composé à insaturation éthylénique et le composé polythiol séparément comme évalué par le procédé décrit dans la présente description ; et
un photoinitiateur ; et
l'exposition de l'adhésif liquide thiol-ène-époxy durcissable, en une partie, à deux étapes à un rayonnement actinique pour durcir partiellement l'adhésif liquide et former un adhésif de phase B.

14. Procédé selon la revendication 13 comprenant en outre le chauffage de l'adhésif de phase B à une température d'au moins 60 °C, jusqu'à 90 °C, ou dans une plage allant de 60 °C à 65 °C pour durcir encore l'adhésif.

15. Procédé selon la revendication 13, comprenant en outre :
l'application de la composition adhésive liquide thiol-ène-époxy durcissable, en une partie sur un substrat pour former une image, dans lequel l'application de la composition adhésive liquide thiol-ène-époxy durcissable, en une partie sur un substrat comprend l'application de la composition par impression au pochoir ou par sérigraphie pour former une image.
